# EUROPEAN PATENT SPECIFICATION

(11) **EP 2 192 369 B1**
(45) Date of publication and mention of the grant of the patent: **18.03.2020**
(21) Application number: 09252419.8
(22) Date of filing: 15.10.2009
(51) Int. Cl.: F28D 7/08, F28D 20/00, F28D 1/047, F28D 15/02

(54) **Heat absorbing or dissipating device with multi-pipe reversely transported temperature difference fluids**
Wärme absorbierende oder ableitende Vorrichtung mit durch mehrere Rohrleitungen in umgekehrter Richtung transportierten Temperaturdifferenzflüssigkeiten
Dispositif d'absorption ou de dissipation de chaleur doté de fluides à différentes températures transportés à contre-courant dans de multiples tuyaux

(30) Priority: 15.10.2008 US 285862
(43) Date of publication of application: 02.06.2010
(73) Proprietor: Yang, Tai-Her, Taipei (TW)
(72) Inventor: Yang, Tai-Her, Taipei (TW)
(74) Representative: Wright, Howard Hugh Burnby

(56) References cited:
- EP-A1- 0 569 293
- EP-A2- 0 732 550
- WO-A1-99/61850
- CH-A- 252 971
- DE-A1- 2 331 420
- US-A- 3 305 011
- US-A- 4 711 298
- US-A- 5 596 877

## Description

### BACKGROUND OF THE INVENTION

### (a) Field of the invention

The present invention discloses a device by using multi-pipe to pass the thermal conductive fluids in reverse directions as the heat absorbing or dissipating body, more specifically it is disposed with at least one passage of the first fluid piping and at least one passage of the second fluid piping in parallel or quasi-parallel arrangement, wherein the first fluid piping and the second fluid piping is arranged for transporting the thermal conductive fluids constituted by gaseous or liquid state fluid, gaseous to liquid state fluid or liquid to gaseous state fluid in temperature difference to the passively heat dissipation or absorption receiving article or space in mutually reverse directions, so as to produce heat absorbing or dissipating function onto the passively heat dissipation or absorption receiving article or space thereby forming a more uniform temperature distribution status on the passively heat dissipation or absorption receiving article or space.

### (b) Description of the Prior Art

For the conventional heat absorbing or dissipating devices by passing through thermal conductive fluid as the heat absorbing or dissipating body constituted by gaseous or liquid state fluid, gaseous to liquid state fluid, or liquid to gaseous state fluid such as engine cooling water radiators, heat absorbing cooling energy discharge devices utilizing thermal conductive fluid, or heat dissipating warming energy discharge devices such as warming devices, heaters, or the warming energy transfer device, etc., as the flow direction of the thermal conductive fluid is fixed, larger temperature difference is formed at each position on the heat absorbing or dissipating body of the thermal conductive fluid.

PCT patent application no. 60/086,490 (published as WO 99/61850) discloses an ice-on-coil thermal storage system in which a serpentine coil structure is placed in water. The ice-coil tubes are never horizontal, but are "near-horizontal" sloped tubes to facilitate air removal during filling of the tubes. This document discloses all features of the preamble of claim 1.

US patent application and publication no. 3,305,011 relates to tubular heat exchangers comprising internested, sinuous tubes providing independent flow passages for use as radiators. The heat exchangers also comprise conduction webs connected between the tubes.

US patent application no. 515,596 (published as US 5,596,877 A) discloses a cooling apparatus comprising a vessel confining a pool of liquid. A plurality of separate tubular passageways are immersed in the liquid. A header assembly is provided having a first chamber and a second chamber. The first chamber is operatively connected to one end of each of the separate tubular passageways and the second chamber is operatively connected to the other end of each of the separate tubular passageways.

Swiss patent publication CH 252971 A discloses two crossed serpentine tubings in a floor heating construction, whereby the heat of the first tubing is further spread by the second overlying tubing and radiated from the floor body to the room. Both tubings comprise single fluid pipes.

### SUMMARY OF THE INVENTION

The present invention discloses a heat absorbing or dissipating device with multi-pipe reversely transported thermal conductive fluids in accordance with claim 1.

### BRIEF DESCRIPTION OF THE DRAWINGS

Fig. 1 is a main structural schematic view of a heat absorbing or dissipating device for being passed through by thermal conductive fluid at fixed flow direction being constituted by conventional heat absorbing or dissipating gaseous or liquid state fluid or gaseous to liquid state fluid, or liquid to gaseous state fluid, etc.
Fig. 2 is a temperature difference distribution diagram of Fig. 1 being operated for the heat absorbing cooling energy discharge device function.
Fig. 3 is a temperature difference distribution diagram of Fig. 1 being operated for the heat dissipating warming energy discharge device function.
Fig. 4 is a main structural schematic view of the heat absorbing or dissipating device with multi-pipe reversely transported temperature difference fluids not forming part of the present invention.
Fig. 5 is a temperature difference distribution diagram formed on the structure shown in Fig. 4 being operated for heat absorbing cooling energy discharge device function.
Fig. 6 is a temperature difference distribution diagram formed on the structure shown in Fig. 4 being operated for heat dissipating warming energy discharge device function.
Fig. 7 is a main structural schematic view of the structure shown in Fig. 4 showing that the first fluid piping and the second fluid piping for directly reversely transporting thermal conductive fluids in temperature difference by multi-pipe directly constitute the common structural body and directly transfer thermal energy onto the passively heat dissipation or absorption receiving article or space.
Fig. 8 is a temperature difference distribution diagram formed on the structure shown in Fig. 7 being operated for heat absorbing cooling energy discharge device function.
Fig. 9 is a temperature difference distribution diagram formed on the structure shown in Fig. 7 being operated for heat dissipating warming energy discharge device function.
Fig. 10 is an embodiment schematic view of the structure shown in Fig. 4 showing that the fluid inlets and the fluid outlets of the first fluid piping and the second fluid piping for reversely transporting thermal conductive fluids in temperature difference by multi-pipe are installed at two sides of the piping respectively.
Fig. 11 is a schematic view of the embodiment shown in Fig. 4 showing that heat absorbing or dissipating body (100) combines with thermal conductive fluid passed and passively receiving heat absorbing or dissipating tubular structure body (100') according to the present invention.
Fig. 12 is a schematic view of the embodiment shown in Fig. 4 showing that the heat absorbing or dissipating body (100) combines with a number of the thermal conductive fluid passed and passively receiving heat absorbing or dissipating tubular structure body (100') according to the present invention.
Fig. 13 is a schematic view of the embodiment shown in Fig. 10 showing that the heat absorbing or dissipating body (100) combines with the thermal conductive fluid passed and passively receiving heat absorbing or dissipating tubular structure body (100') according to the present invention.
Fig. 14 is a schematic view of the embodiment shown in Fig. 10 showing that the heat absorbing or dissipating body (100) combines with a number of the thermal conductive fluid passed and passively receiving heat absorbing or dissipating tubular structure body (100') according to the present invention.
Fig. 15 is a structural schematic view of an embodiment not forming part of the present invention, wherein the multiple pipes of the first fluid piping (101) and the second fluid piping (102), which are countercurrent to each other, are sequentially staggered for parallel reversely transmitting thermal conductive fluid (110).
Fig. 16 is a structural schematic view of an embodiment, wherein the first fluid piping (101) and/or the second fluid piping (102) are additionally installed with independent thermal conductive plates.
Fig. 17 is a sectional drawing of line A-A in Fig. 16.
Fig. 18 is a structural schematic view of an embodiment, wherein a common thermal conductive plate is additionally installed between the neighboring fluid piping and the first fluid piping and/or the second fluid piping.
Fig. 19 is a sectional drawing of line B-B in Fig. 18.
Fig. 20 is a structural schematic view of an embodiment, wherein a thermal conductive plate with temperature insulating slots is additionally installed between the neighboring fluid piping and the first fluid piping and/or the second fluid piping.
Fig. 21 is a sectional drawing of line C-C in Fig. 20.
Fig. 22 is a structural schematic view of the embodiment shown in Fig. 15 showing that the first fluid piping and/or the second fluid piping are additionally installed with independent thermal conductive plates.
Fig. 23 is a sectional drawing of line A-A in Fig. 22.
Fig. 24 is a structural schematic view of the embodiment shown in Fig. 15 showing that a common thermal conductive plate is additionally installed between the neighboring fluid piping and the first fluid piping and/or the second fluid piping.
Fig. 25 is a sectional drawing of line B-B in Fig. 24.
Fig. 26 is a structural schematic view of the embodiment shown in Fig. 15 showing that a thermal conductive plate with temperature insulating slots is additionally installed between the neighboring fluid piping and the first fluid piping and/or the second fluid piping.
Fig. 27 is a sectional drawing of line C-C in Fig. 26.
Fig. 28 is a block diagram of a periodic forward/reverse pumping system, according to the present invention.

### DESCRIPTION OF MAIN COMPONENT SYMBOLS

100: Heat absorbing or dissipating body
100': Thermal conductive fluid passed and passively receiving heat absorbing or dissipating tubular structure body
101: First fluid piping
102: Second fluid piping
110: Thermal conductive fluid
111: First fluid inlet
112: First fluid outlet
121: Second fluid inlet
122: Second fluid outlet
200: Passively heat dissipation or absorption receiving article in solid, or colloid, or liquid, or gaseous state or space
300: Independent thermal conductive plate
350: Thermal conductive plate with temperature insulating slots
400: Common thermal conductive plate
500: Control device
600: Two-way movement of fluid pumping device

### DETAILED DESCRIPTION OF THE PREFERED EMBODIMENTS

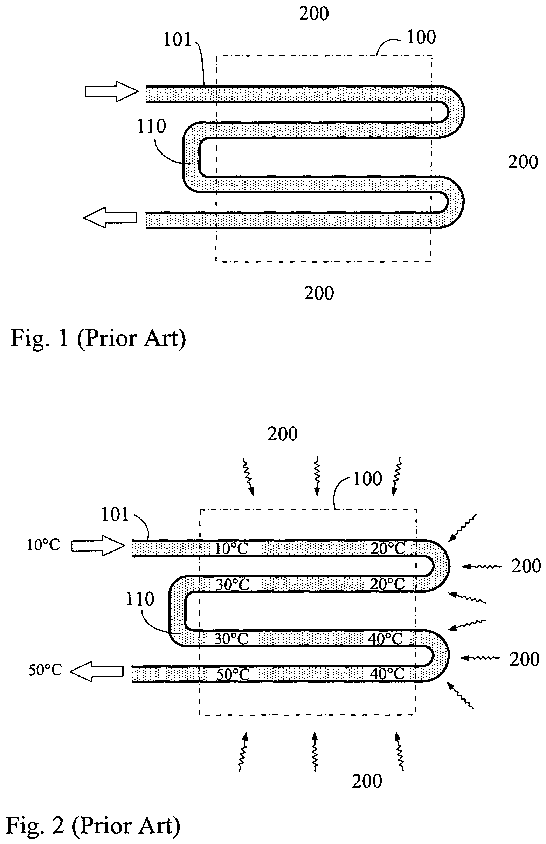

Fig. 1 is a main structural schematic view of a heat absorbing or dissipating device for being passed through by thermal conductive fluids at fixed flow direction being constituted by conventional heat absorbing or dissipating gaseous or liquid state fluid or gaseous to liquid state fluid, or liquid to gaseous state fluid, etc., wherein the thermal conductive fluid (110) constituted by gaseous or liquid state fluid, or gaseous to liquid state fluid, or liquid to gaseous state fluid, etc conventionally is passed through the first fluid piping (101) to combine with the heat absorbing or dissipating assembly constituted by the heat absorbing or dissipating body (100) for **1)** passing through the thermal conductive fluid (110) in the first fluid piping (101) to perform cooling or heating functions through the heat absorbing or dissipating body (100) onto the passively heat dissipation or absorption receiving solid, or colloid, or liquid, or gaseous state article or space (200); or **2)** passing through the thermal conductive fluid (110) in the first fluid piping (101) to reversely receive the surrounding cooling or heating energy of the heat absorbing or dissipating body (100); the item **1)** is often applied in engine cooling water radiators, heat absorbing cooling energy discharge devices utilizing thermal conductive fluid (110), or heat dissipating warming energy discharge devices such as warming devices, heaters, evaporators, condensers, or the cooling or warming energy transfer device, etc. wherein the latter item **2)** is often applied in cooling or warming energy transfer devices; in the item **1)** application, thermal conductive fluid (110) is inputting via the inlet of first fluid piping (101) at one side end of the heat absorbing or dissipating body (100) and outputting via another side end thereby forming a larger temperature difference between the inlet and outlet of the thermal conductive fluids (110) of the first fluid piping (101) of the heat absorbing or dissipating body (100), and similarly in the item **2)** application, it will form a larger temperature difference between the inlet and outlet of the thermal conductive fluids (110) of the first fluid piping (101) of the heat absorbing or dissipating body (100), which are the defects of the conventional heat absorbing or dissipating device.

Fig. 2 is a temperature difference distribution diagram of Fig. 1 being operated for the heat absorbing cooling energy discharge device function; Fig 2 shows that the thermal conductive fluid (110) in fixed flow direction as shown in Fig. 1 being operated in the conventional heat dissipating warming energy discharge functions appears in unidirectional flow path distribution, wherein when the thermal conductive fluid (110) passes through the first fluid piping (101) a larger temperature difference distribution status forms between the inlet and outlet of the thermal conductive fluids (110) of the heat absorbing or dissipating body (100).

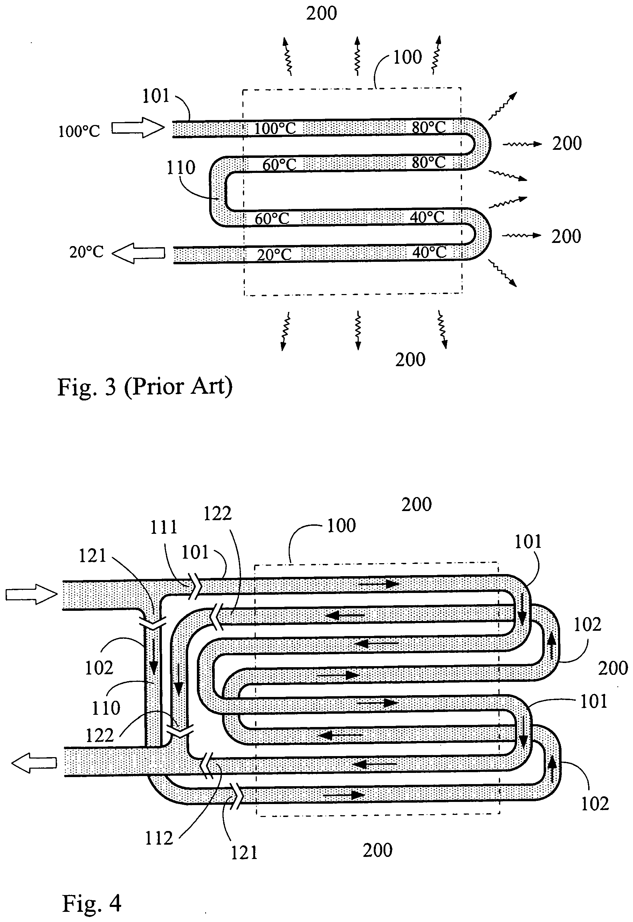

Fig. 3 is a temperature difference distribution diagram of Fig. 1 being operated for the heat dissipating warming energy discharge device function, wherein Fig. 3 shows that the thermal conductive fluid (110) in fixed flow direction as shown in Fig. 1 being operated in the conventional heat absorbing cooling energy discharge function appears in unidirectional flow path distribution, wherein when the thermal conductive fluid (110) passes through the first fluid piping (101) a larger temperature difference distribution status forms between the inlet and outlet of the thermal conductive fluid (110) of the heat absorbing or dissipating body (100).

Aiming to above the phenomenon, the present invention innovatively discloses a device by passing thermal conductive fluids for heat absorption or dissipation which uses a method by respectively pumping the multi-pipe temperature difference fluids in reverse directions to produce heat absorbing or dissipating function onto the passively heat dissipation or absorption receiving article or space thereby allowing the heat absorbing or dissipating thermal conductive fluid to appear the more uniform temperature distribution status.

Fig. 4 is a main structural schematic view of the heat absorbing or dissipating device with multi-pipe reversely transported temperature difference fluids not forming part of the present invention, wherein the assembly structure of the heat absorbing or dissipating device with multi-pipe reversely transported temperature difference fluids mainly comprises the following:
-----Heat absorbing or dissipating body (100): made of thermal conductive material in solid, or colloid, or liquid, or gaseous state for receiving the thermal energy of the thermal conductive fluid (110) constituted by gaseous or liquid state fluid, gaseous to liquid state fluid, or liquid to gaseous state fluid inside the combined first fluid piping (101) and the second fluid piping (102) so as to perform heat absorbing cooling energy discharge operating function or heat dissipating warming energy discharge operating function onto the passively heat dissipation or absorption receiving solid, or colloid, or liquid, or gaseous state article or space (200), wherein the number of the heat absorbing or dissipating bodies (100) can be one or more than one;
----First fluid piping (101), Second fluid piping (102): made of good thermal conductive material for reversely passing the thermal conductive fluid (110) constituted by gaseous or liquid state liquid, gaseous to liquid state fluid, or liquid to gaseous state fluid for transferring thermal energy to the heat absorbing or dissipating body (100) made of good thermal conductive material in solid, or colloid, or liquid, or gaseous state, wherein the first fluid piping (101) and the second fluid piping (102) can be respectively constituted by one or more than one passage;

The first fluid inlet (111) of the first fluid piping (101) is parallel connected with the second fluid inlet (121) of the second fluid piping (102) to receive the inflow of the thermal conductive fluid (110) and the first fluid outlet (112) of the first fluid piping (101) is parallel connected with the second fluid outlet (122) of the second fluid piping (102) to receive the outflow of the thermal conductive fluid (110);

The first fluid piping (101) and the second fluid piping (102) are parallel or quasi-parallel distributed in a plane structure or three-dimensional structure in the heat absorbing or dissipating body (100), and it is characterized by that the first fluid inlet (111) and the second fluid outlet (122) are installed at the location adjacent to the heat absorbing or dissipating body (100), while the first fluid outlet (112) and the second fluid inlet (121) are installed on another location adjacent to the heat absorbing or dissipating body (100) thereby the thermal conductive fluids (110) in two circuits inside the first fluid piping (101) and the second fluid piping (102) being installed on the heat absorbing or dissipating body (100) are respectively transported in reverse directions to commonly allow the whole temperature difference of the heat absorbing or dissipating body (100) more uniformly distributed for performing heat absorbing or dissipating function onto the passively heat dissipation or absorption receiving solid, or colloid, or liquid, or gaseous state article or space (200).

The structural relationships between the heat absorbing or dissipating body (100), the first fluid piping (101), and the second fluid piping (102) as shown in Fig. 4 can be constituted by one or more than one relationships as following, include:
(1) The heat absorbing or dissipating body (100) is in a assembled structure with at least one of the first fluid piping (101) and the second fluid piping (102);
(2) The heat absorbing or dissipating body (100) is in an integral structure with at least one of the first fluid piping (101) and the second fluid piping (102);
(3) The function of the heat absorbing or dissipating body (100) is directly provided by at least one of the first fluid piping (101) and the second fluid piping (102);
(4) The first fluid piping (101) and/or the second fluid piping (102) is additionally installed with independent thermal conductive plate (300) which does not connect with the neighboring fluid piping;
(5) Common thermal conductive plate (400) connects between the neighboring fluid piping and the first fluid piping (101) and/or the second fluid piping (102); and
(6) Thermal conductive plate with temperature insulating slots connects between the neighboring fluid piping and the first fluid piping (101) and/or the second fluid piping (102).

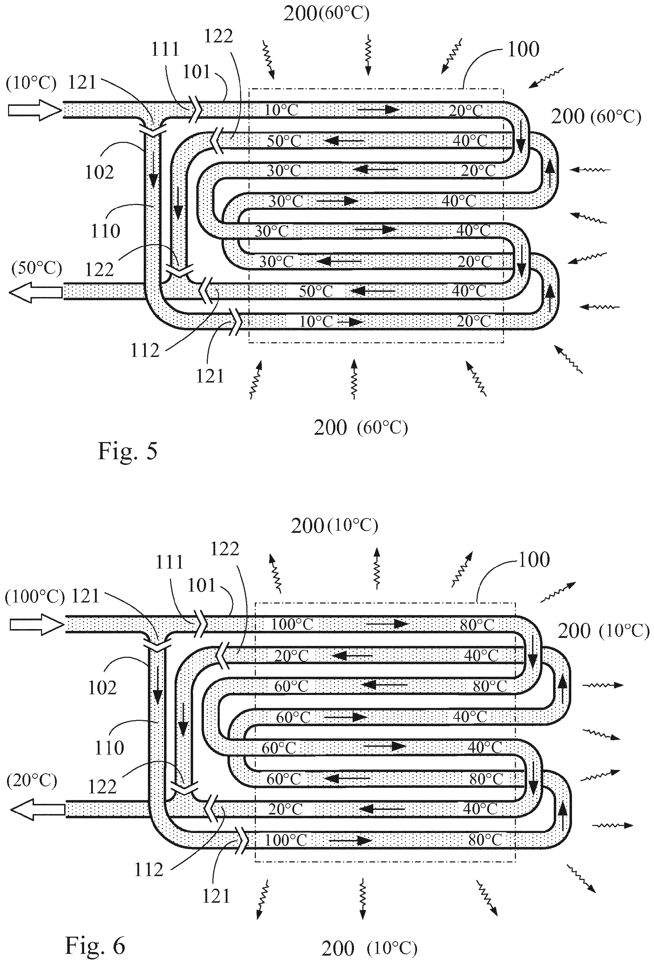

Fig. 5 is a temperature difference distribution diagram of the structure shown in Fig. 4 being operated for heat absorbing cooling energy discharge device function; as shown in Fig. 5, in the heat absorbing or dissipating body (100) constituted by solid, or colloid, or liquid, or gaseous state thermal conductive material as shown in the structure of Fig. 4, the first fluid inlet (111) of the first fluid piping (101) and the second fluid outlet (122) of the second fluid piping (102) are installed in adjacency, while the first fluid outlet (112) of the first fluid piping (101) and the second fluid inlet (121) of the second fluid piping (102) are installed in adjacency at another location for respectively transporting the two circuits of the thermal conductive fluid flows (110) in reverse directions, wherein the input flow of the thermal conductive fluid (110) appears at lower temperature status, while the output flow of the thermal conductive fluid (110) appears at higher temperature status, and the heat absorbing or dissipating body (100) appears at an intermediate temperature between the ones of input and output flows of the thermal conductive fluid (110) and appears more uniformly distributed along the heat absorbing or dissipating body (100) for performing heat absorbing and cooling energy discharge onto the passively heat dissipation or absorption receiving article in solid, or colloid, or liquid, or gaseous state or space (200) thereby avoiding localized over-low temperatures.

Fig. 6 is a temperature difference distribution diagram of the structure shown in Fig. 4 being operated for heat dissipating warming energy discharge device function; as shown in Fig. 6, in the heat absorbing or dissipating body (100) constituted by solid, or colloid, or liquid, or gaseous state thermal conductive material as shown in the structure of Fig. 4, the first fluid inlet (111) of the first fluid piping (101) and the second fluid outlet (122) of the second fluid piping (102) are installed in adjacency, while the first fluid outlet (112) of the first fluid piping (101) and the second fluid inlet (121) of the second fluid piping (102) are installed in adjacency at another location for respectively transporting the two circuits of the thermal conductive fluid flows (110) in reverse directions, wherein the input flow of the thermal conductive fluid (110) appears at higher temperature status, while the output flow of the thermal conductive fluid (110) appears at lower temperature status, and the heat absorbing or dissipating body (100) appears at an intermediate temperature between the ones of input and output flows of the thermal conductive fluid (110) and appears more uniformly distributed along the heat absorbing or dissipating body (100) for performing heat dissipating and warming energy discharge onto the passively heat dissipation or absorption receiving article in solid, or colloid, or liquid, or gaseous state or space (200) thereby avoiding over-high temperatures.

For the heat absorbing or dissipating device with multi-pipe reversely transported temperature difference fluids, beside of transferring thermal energy via the heat absorbing or dissipating body (100), the first fluid piping (101) and the second fluid piping (102) can be parallel or quasi-parallel distributed in a plane structure or three-dimensional structure to directly constitute structural body, thereby the first fluid piping (101) and the second fluid piping (102) is arranged to directly reversely transport the thermal conductive fluid (110) constituted by gaseous or liquid state fluid, gaseous to liquid state fluid, or liquid to gaseous state fluid in temperature difference from the same end side thereby allowing the first fluid piping (101) and the second fluid piping (102) to directly perform heat dissipating warming energy discharge or heat absorbing cooling energy discharge on the passively heat dissipating or absorption receiving article or space.

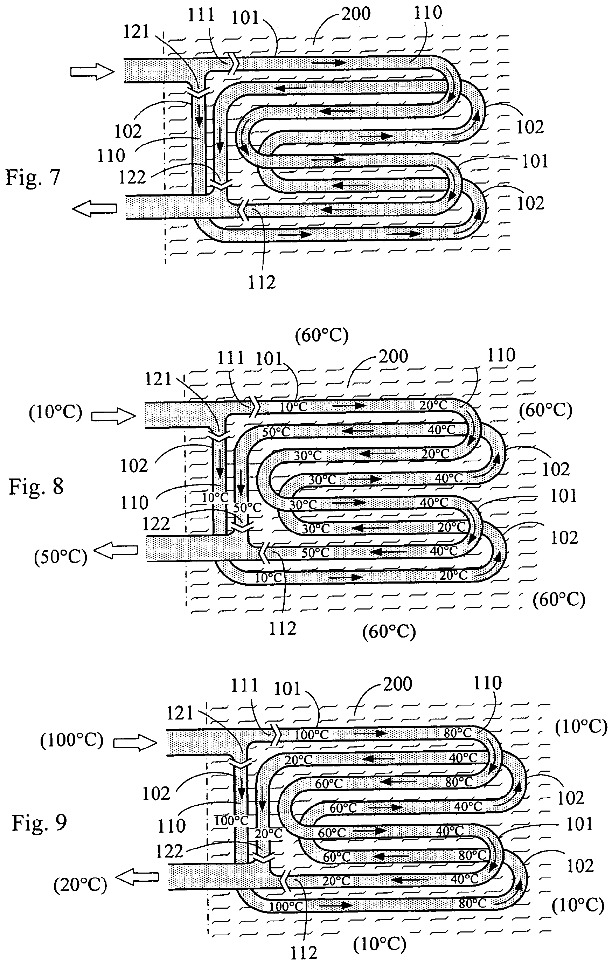

Fig. 7 is a main structural schematic view of the structure shown in Fig. 4 showing that the first fluid piping and the second fluid piping for directly reversely transporting thermal conductive fluids in temperature difference by multi-pipe directly constitute the common structural body and directly transfer thermal energy onto the passively heat dissipation or absorption receiving article or space; wherein the structure of Fig. 7 is further constituted, including:
----First fluid piping (101), Second fluid piping (102): made of good thermal conductive material to constitute the common structural body for transferring thermal energy through the thermal conductive fluid (110) constituted by gaseous or liquid state liquid, gaseous to liquid state fluid, or liquid to gaseous state fluid to the passively heat dissipation or absorption receiving article in solid, or colloid, or liquid, or gaseous state or space (200), wherein the first fluid piping (101) and the second fluid piping (102) can be respectively constituted by one or more than one circuits; the first fluid inlet (111) of the first fluid piping (101) is parallel connected with the second fluid inlet (121) of the second fluid piping (102) to receive inflow of the thermal conductive fluid (110), and the first fluid outlet (112) of the first fluid piping (101) is parallel connected with the second fluid outlet (122) of the second fluid piping (102) to receive outflow of the thermal conductive fluid (110), while the first fluid piping (101) and the second fluid piping (102) the first fluid piping (101) and the second fluid piping (102)appear in parallel or quasi-parallel distributed in a plane structure or three-dimensional structure to constitute the common structural body, wherein it is characterized by that the first fluid inlet (111) of the first fluid piping (101) and the second fluid outlet (122) of the second fluid piping (102) are installed at the location adjacent to their common structural body, while the first fluid outlet (112) of the first fluid piping (101) and the second fluid inlet (121) of the second fluid piping (102) are installed on the another location adjacent to their common structural body, thereby for the first fluid piping (101) and the second fluid piping (102) in the multiple pipes of the common structural body to transport two circuits of the thermal conductive fluid flows (110) respectively in reverse directions thereby making the whole temperature difference of their common structural body more uniformly distributed in the passively heat dissipation or absorption receiving article in solid, or colloid, or liquid, or gaseous state or space (200) to perform heat absorption or dissipation onto the passively heat dissipation or absorption receiving article in solid, or colloid, or liquid, or gaseous state or space (200).

For the heat absorbing or dissipating device with multi-pipe reversely transported temperature difference fluids of the present invention, the structural relationships between the passively heat dissipation or absorption receiving article in solid, or colloid, or liquid, or gaseous state or space (200), the first fluid piping (101) and the second fluid piping (102) include the following: the function of the heat absorbing or dissipating body (100) is directly provided by at least one of the first fluid piping (101) and the second fluid piping (102) to perform heat absorption or dissipation onto the passively heat dissipation or absorption receiving article in solid, or colloid, or liquid, or gaseous state or space (200), or to further use the first fluid piping and the second fluid piping that using multi-pipe to reversely transport thermal conductive fluids to directly constitute the common structural body and to directly transfer thermal energy onto the passively heat dissipation or absorption receiving article in solid, or colloid, or liquid, or gaseous state or space (200).

Fig. 8 is a temperature difference distribution diagram of the structure shown in Fig. 7 being operated for heat absorbing cooling energy discharge device function; as shown in Fig. 8, in the common structural body as shown in the structure of Fig. 7, the first fluid inlet (111) of the first fluid piping (101) and the second fluid outlet (122) of the second fluid piping (102) are installed in adjacency, while the first fluid outlet (112) of the first fluid piping (101) and the second fluid inlet (121) of the second fluid piping (102) are installed in adjacency at another location for respectively transporting the two circuits of the thermal conductive fluid flows (110) in reverse directions, wherein the input flow of the thermal conductive fluid (110) appears at lower temperature status, while the output flow of the thermal conductive fluid (110) appears at higher temperature status, and the common structural body appears at an intermediate temperature between the ones of input and output flows of thermal conductive fluids (110) and appears more uniformly distributed in the passively heat dissipation or absorption receiving article in solid, or colloid, or liquid, or gaseous state or space (200) to perform heat absorbing and cooling energy discharge onto the passively heat dissipation or absorption receiving article in solid, or colloid, or liquid, or gaseous state or space (200) thereby avoiding localized over-low temperatures.

Fig. 9 is a temperature difference distribution diagram of the structure shown in Fig. 7 being operated for heat dissipating warming energy discharge device function; as shown in Fig. 9, in the common structural body as shown in the structure of Fig. 7, the first fluid inlet (111) of the first fluid piping (101) and the second fluid outlet (122) of the second fluid piping (102) are installed in adjacency, while the first fluid outlet (112) of the first fluid piping (101) and the second fluid inlet (121) of the second fluid piping (102) are installed in adjacency at another location for respectively transporting the two circuits of the thermal conductive fluid flows (110) in reverse directions, wherein the input flow of the thermal conductive fluid (110) appears at higher temperature status, while the output flow of the thermal conductive fluid (110) appears at lower temperature status, and the common structural body appears at an intermediate temperature between the ones of input and output flows of thermal conductive fluids (110) and appears more uniformly distributed in the passively heat dissipation or absorption receiving article in solid, or colloid, or liquid, or gaseous state or space (200) to perform heat dissipating and warming energy discharge onto the passively heat dissipation or absorption receiving article in solid, or colloid, or liquid, or gaseous state or space (200) thereby avoiding localized over-high temperatures.

The heat absorbing or dissipating device with multi-pipe reversely transported temperature difference fluids further can be installed with the fluid inlets and the fluid outlets of the first fluid piping and the second fluid piping for reversely transporting thermal conductive fluids in temperature difference by multi-pipe at two sides of the piping, with same height or different height, respectively.

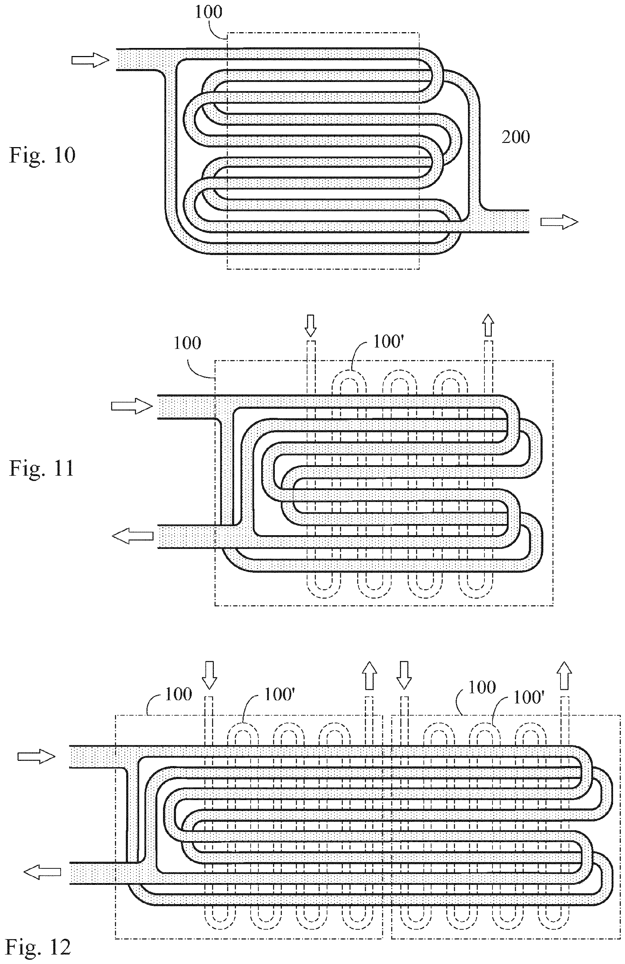

Fig. 10 is an embodiment schematic view of the structure shown in Fig. 4 showing that the fluid inlets and the fluid outlets of the first fluid piping and the second fluid piping for reversely transporting thermal conductive fluids in temperature difference by multi-pipe are installed at two sides of the piping respectively.

According to the present invention, the heat absorbing or dissipating device with multi-pipe reversely transported temperature difference fluids further is installed with thermal conductive fluid passed and passively receiving heat absorbing or dissipating tubular structure body (100'), which is composed of one or more fluid piping.

The embodiments shown in Fig. 11 to Fig. 14 give examples of the device according to the present invention as defined by claim 1.

Fig. 11 is a schematic view of the embodiment shown in Fig. 4 showing that the heat absorbing or dissipating body (100) combines with the thermal conductive fluid passed and passively receiving heat absorbing or dissipating tubular structure body (100').

Fig. 12 is a schematic view of the embodiment shown in Fig. 4 showing that the heat absorbing or dissipating body (100) combines with a number of the thermal conductive fluid passed and passively receiving heat absorbing or dissipating tubular structure body (100').

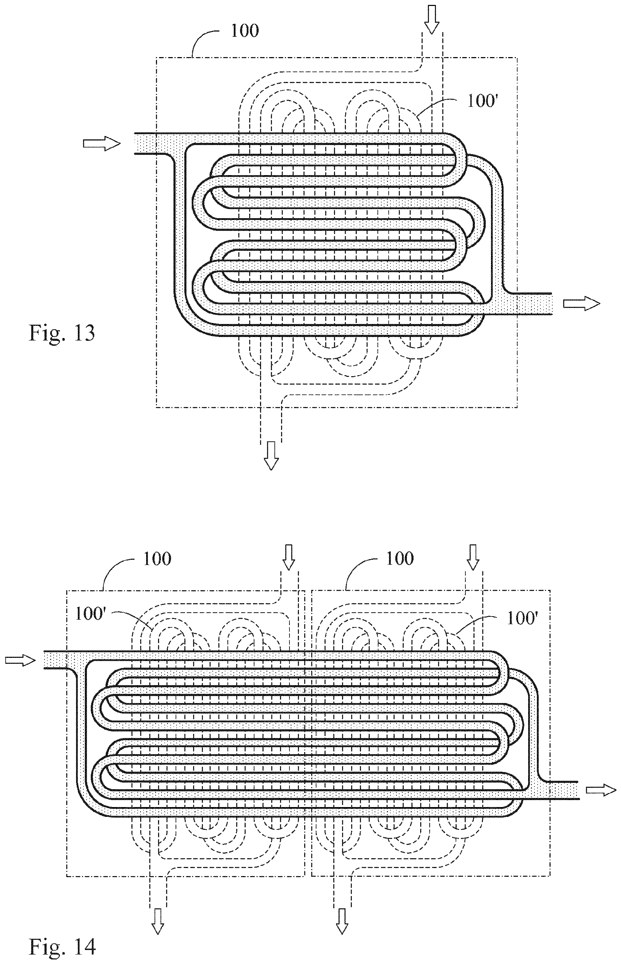

Fig. 13 is a schematic view of the embodiment shown in Fig. 10 showing that the heat absorbing or dissipating body (100) combines with the thermal conductive fluid passed and passively receiving heat absorbing or dissipating tubular structure body (100').

Fig. 14 is a schematic view of the embodiment shown in Fig. 10 showing that the heat absorbing or dissipating body (100) combines with a number of the thermal conductive fluid passed and passively receiving heat absorbing or dissipating tubular structure body (100').

The heat absorbing or dissipating device with multi-pipe reversely transported temperature difference fluids also can be formed by the multiple pipes of the first fluid piping (101) and the second fluid piping (102), which are countercurrent to each other, sequentially staggered for parallel reversely transmitting the thermal conductive fluid (110).

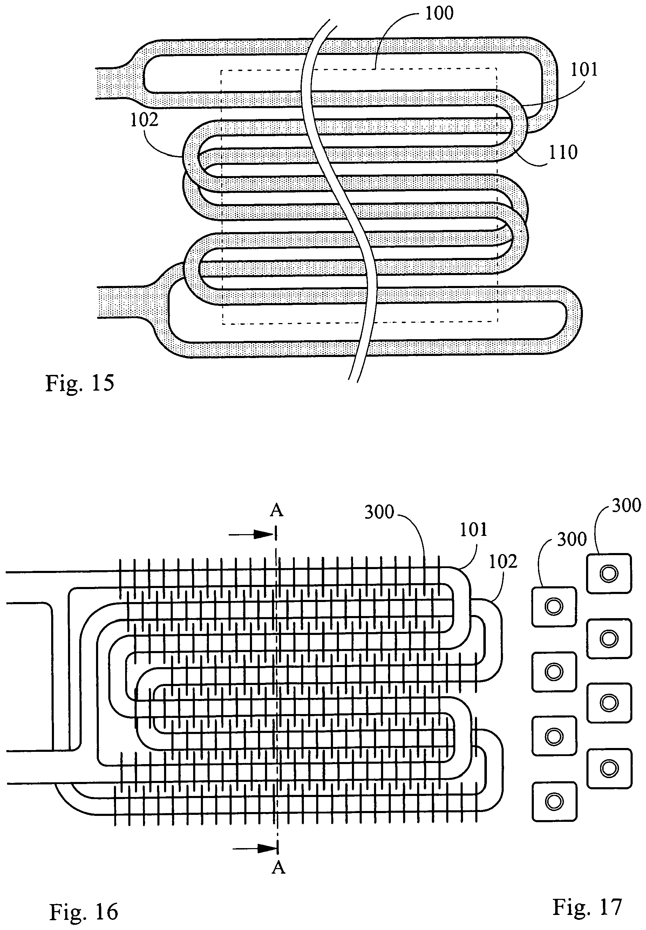

Fig. 15 is a structural schematic view of an embodiment, wherein the multiple pipes of the first fluid piping (101) and the second fluid piping (102), which are countercurrent to each other, are sequentially staggered for parallel reversely transmitting the thermal conductive fluid (110).

As shown in Fig. 15, by the multiple pipes of the first fluid piping (101) and the second fluid piping (102), which are countercurrent to each other, being sequentially staggered for forming the heat absorbing or dissipating body (100), when the thermal conductive fluid (110) passes through the first fluid piping (101) with forward current and the second fluid piping (102) with reverse current, which are sequentially staggered, more uniform temperature distribution will be produced at two sides of the heat absorbing or dissipating body (100); the above first fluid piping (101) and/or second fluid piping (102) are straight pipes each with single segment or curved pipes each with at least one bending, and every bending segment of the first fluid piping (101) and the second fluid piping (102) are staggered in the order of mutual countercurrent.

The piping in the heat absorbing or dissipating device with multi-pipe reversely transported temperature difference fluids can be additionally installed with an independent thermal conductive plate (300), and/or a common thermal conductive plate (400), and/or a thermal conductive plate (350) with temperature insulating slots to improve effects of heat absorption or dissipation, wherein:
for further improving effects of heat absorption or dissipation, the first fluid piping (101) and/or the second fluid piping (102) can be additionally installed with an independent thermal conductive plate to increase heat absorption or dissipation area to improve effects of heat absorption or dissipation.

Fig. 16 is a structural schematic view of an embodiment, wherein the first fluid piping (101) and/or the second fluid piping (102) are additionally installed with independent thermal conductive plates.

Fig. 17 is a sectional drawing of line A-A in Fig. 16.

For further increasing heat absorption or dissipation area and enhancing structure stability, common thermal conductive plate (400) is additionally installed between the neighboring fluid piping and the first fluid piping (101) and/or the second fluid piping (102) to improve effects of heat absorption or dissipation.

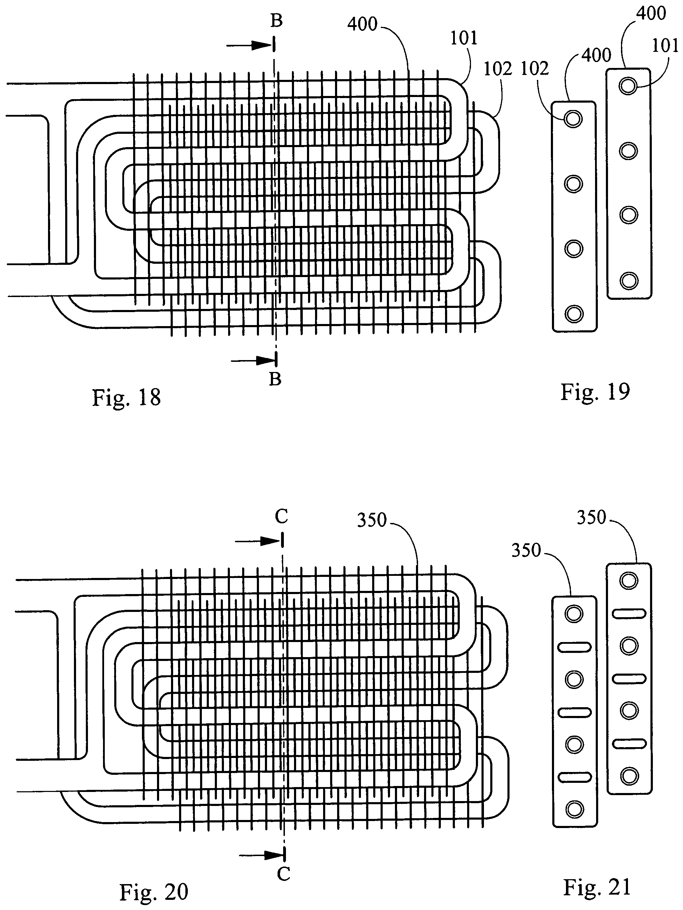

Fig. 18 is a structural schematic view of an embodiment, wherein a common thermal conductive plate is additionally installed between the neighboring fluid piping and the first fluid piping and/or the second fluid piping.

Fig. 19 is a sectional drawing of line B-B in Fig. 18.

For increasing heat absorption or dissipation area and enhancing structure stability, thermal conductive plate (350) with temperature insulating slots further can be additionally installed between the neighboring fluid piping and the first fluid piping (101) and/or the second fluid piping (102) to improve effects of heat absorption or dissipation.

Fig. 20 is a structural schematic view of an embodiment, wherein a thermal conductive plate with temperature insulating slots is additionally installed between the neighboring fluid piping and the first fluid piping and/or the second fluid piping.

Fig. 21 is a sectional drawing of line C-C in Fig. 20.

As the embodiment of the heat absorbing or dissipating device with multi-pipe reversely transported temperature difference fluids shown in Fig. 15, by the multiple pipes of the first fluid piping (101) and the second fluid piping (102) being sequentially staggered for forming the heat absorbing or dissipating body (100), when the thermal conductive fluid (110) passes through the first fluid piping (101) and the second fluid piping (102), which are sequentially staggered, more uniform temperature distribution will be produced at two sides of the heat absorbing or dissipating body (100); for further improving effects of heat absorption or dissipation, the first fluid piping (101) and/or the second fluid piping (102) can be additionally installed with the independent thermal conductive plate (300) to increase heat absorption or dissipation area to improve effects of heat absorption or dissipation.

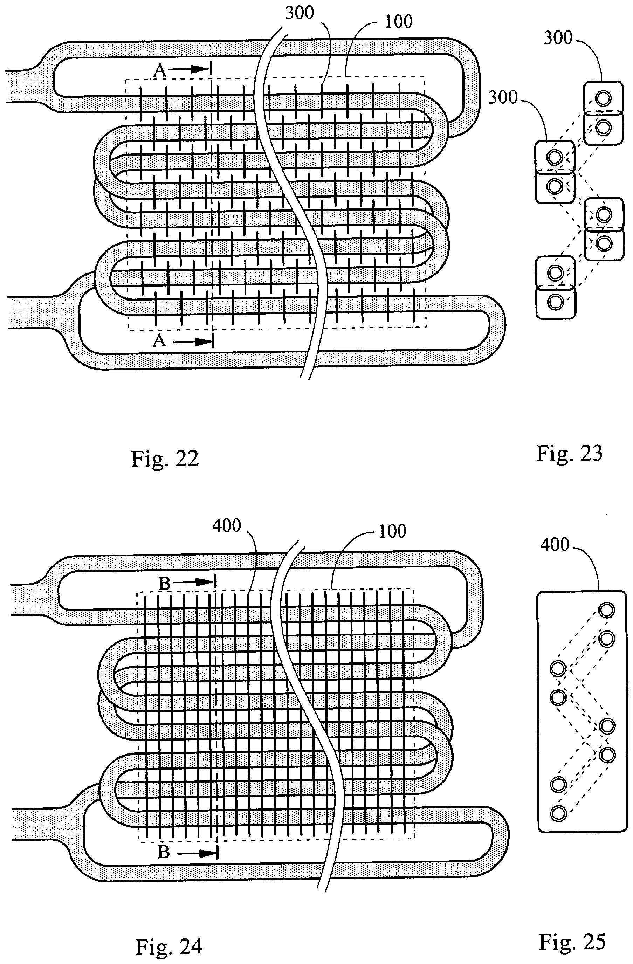

Fig. 22 is a structural schematic view of the embodiment shown in Fig. 15 showing that the first fluid piping and/or the second fluid piping are additionally installed with independent thermal conductive plates.

Fig. 23 is a sectional drawing of line A-A in Fig. 22.

As the embodiment of the heat absorbing or dissipating device with multi-pipe reversely transported temperature difference fluids shown in Fig. 15, for further improving effects of heat absorption or dissipation, the common thermal conductive plate (400) is additionally installed between the neighboring fluid piping and the first fluid piping (101) and/or the second fluid piping (102) to improve effects of increasing heat absorption or dissipation area and enhancing structure stability.

Fig. 24 is a structural schematic view of the embodiment shown in Fig. 15 showing that a common thermal conductive plate is additionally installed between the neighboring fluid piping and the first fluid piping and/or the second fluid piping.

Fig. 25 is a sectional drawing of line B-B in Fig. 24.

As the embodiment of the heat absorbing or dissipating device with multi-pipe reversely transported temperature difference fluids shown in Fig.15, in order to give consideration to structure stability, process, and the need for functionality of independent temperature guiding, the thermal conductive plate (350) with temperature insulating slots further can be additionally installed between the neighboring fluid piping and the first fluid piping (101) and/or the second fluid piping (102) to increase heat absorption or dissipation area and enhance structure stability.

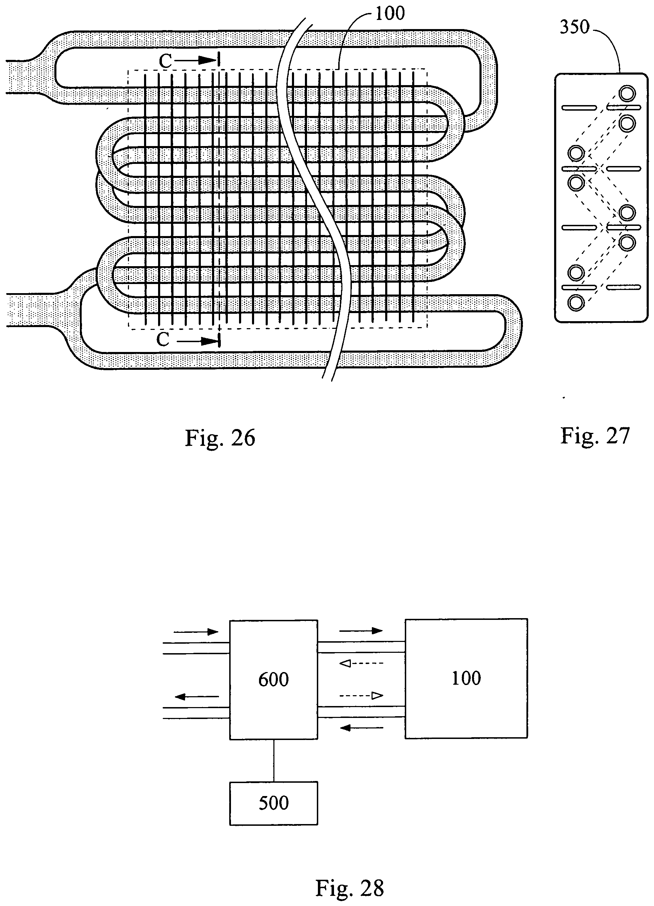

Fig. 26 is a structural schematic view of the embodiment shown in Fig. 15 showing that a thermal conductive plate with temperature insulating slots is additionally installed between the neighboring fluid piping and the first fluid piping and/or the second fluid piping.

Fig. 27 is a sectional drawing of line C-C in Fig. 26.

As the embodiment of the heat absorbing or dissipating device with multi-pipe reversely transported temperature difference fluids, the fluid passing through the first fluid piping (101) and/or the thermal conductive fluid passed and passively receiving heat absorbing or dissipating tubular structure body (100') can be controlled by control device (500) to drive two-way movement of fluid pumping device (600) for periodic forward/reverse pumping operation, to periodically forward/reverse pump the thermal conductive fluid (110), and to improve effects of uniform temperature.

The above two-way movement of fluid pumping device (600) is used for periodic forward/reverse pumping under the control of control device composed of electromechanical device, electronic device, or microcomputer and related software.

Fig. 28 is a block diagram of a periodic forward/reverse pumping system, according to the present invention.

For applications of the heat absorbing or dissipating device with multi-pipe reversely transported temperature difference fluids, one or more than one methods based afore the operating principles according to application structural needs and cost considerations can be used to make the following designs, including:
--For the heat absorbing or dissipating device with multi-pipe reversely transported temperature difference fluids, the first fluid piping (101) and the second fluid piping (102) can be constituted by an integral type structure of the piping made directly using the structure of the heat absorbing or dissipating body (100);
--For the heat absorbing or dissipating device with multi-pipe reversely transported temperature difference fluids, the three of first fluid piping (101), second fluid piping (102) and heat absorbing or dissipating body (100) can be constituted by an assembled structure;
--For the heat absorbing or dissipating device with multi-pipe reversely transported temperature difference fluids, the heat absorbing or dissipating body (100) for combination with the first fluid piping (101) and the second fluid piping (102) can be constituted by the structural unit of the single structural body in plate, block, or multi-fins shape, or the structural unit assembled by fins, and can be constituted by at least one structural unit;
--For the heat absorbing or dissipating device with multi-pipe reversely transported temperature difference fluids, the three of the heat absorbing or dissipating body (100) constituted by solid, or colloid, or liquid, or gaseous state thermal conductive material, the first fluid piping (101) and the second fluid piping (102) can be partly or all made to various geometric shapes while without changing the principles;
--For the heat absorbing or dissipating device with multi-pipe reversely transported temperature difference fluids, the thermal conductive fluid (110) passing through the first fluid piping (101) and the second fluid piping (102) can be transported by pumping, evaporation, or heat-cold natural circulation;
--For the heat absorbing or dissipating device with multi-pipe reversely transported temperature difference fluids, the warming or cooling energy is discharged to the liquid state passively heat dissipation or absorption receiving article or space (200) through using the cold-heat natural circulation of fluid in temperature difference or forced fluid pumping to generate thermal transfer function of heat convention, radiation or conduction; or the warming or cooling energy is discharged to the solid or colloidal or liquid or gaseous state passively heat dissipation or absorption receiving article or space (200) through conduction;
--For the heat absorbing or dissipating device with multi-pipe reversely transported temperature difference fluids, the thermal conductive fluid (110) passing through the first fluid piping (101) and the second fluid piping (102) is closed-loop circulated or open-loop released;
--For the heat absorbing or dissipating device with multi-pipe reversely transported temperature difference fluids, the fluid inlets and the fluid outlets of the various fluid piping can be installed with same or different pointing direction within three-dimensional space; and
--For the heat absorbing or dissipating device with multi-pipe reversely transported temperature difference fluids, there are various installation modes of the fluid piping, including that the fluid piping is composed of tubular structure; and/or the fluid piping is composed of plate sheet structure for fluid flow; and/or the pore-like fluid piping is composed of blocky structure for fluid flow.

The heat absorbing or dissipating device with multi-pipe reversely transported temperature difference fluids of the present invention can be applied for various heat absorbing, or dissipating, or cooling heat conducting application devices, such as the cooling water radiators of the engine, heat absorbing cooling energy discharge device using thermal conductive fluid, or heat dissipating warming energy discharge device using thermal conductive fluid such as thermal energy, heater or thermal energy transfer devices for warming equipments, or heating or cooling for ceilings, walls or floors of the buildings, or cooling of photovoltaic panels, or heating or cooling for electrical machine or power machineries, or heat absorption and dissipation of various machine casings, heat pipe structures, structure casings, various chips or semiconductor components, ventilation devices, or the heat absorption, heat dissipation or thermal energy transfer of information, audio or image devices, or heat dissipation of various lamp or LED devices, or the heat absorption of the evaporator or heat dissipation or thermal energy transfer of condensers of air conditioning devices, or thermal energy transfer of mechanical devices, or heat dissipation of frictional heat loss, or heat dissipation or thermal energy transfer of electric heater or other electric heating home appliances or cooking devices, or heat absorption or thermal energy transfer of flame heating stoves or cooking devices, or heat absorption, heat dissipation or thermal energy transfer of earth layer or water thermal energy, plant or housing building or building material or building structure devices, heat absorbing or dissipation of water tower, or heat absorption, heat dissipation or thermal energy transfer of batteries of fuel cells, etc.;

As well as applied for thermal energy transfer in home appliances, industrial products, electronic products, electrical machines or mechanical devices, power generation equipments, buildings, air conditioning devices, industrial equipments or industrial manufacturing process.

## Claims

1. A heat absorbing or dissipating device with multi-pipe reversely transported thermal conductive fluids, which is a device arranged to pass thermal conductive fluids through a heat absorbing or dissipating body, wherein the multiple pipes comprise at least a first fluid piping and a second fluid piping, and reversely transport the thermal conductive fluids respectively, so as to produce heat absorbing or dissipating function onto a passively heat dissipation or absorption receiving tubular structure body thereby the thermal conductive fluids form a more uniform temperature distribution status on the heat absorbing or dissipating body, the main components of the device including:
----Heat absorbing or dissipating body (100): made of thermal conductive material in solid or colloid state for receiving the thermal energy of the thermal conductive fluid (110) constituted by gaseous or liquid state fluid, gaseous to liquid state fluid, or liquid to gaseous state fluid inside the combined first fluid piping (101) and the second fluid piping (102);
----First fluid piping (101), Second fluid piping (102): made of good thermal conductive material for reversely passing the thermal conductive fluid (110) for transferring thermal energy to the heat absorbing or dissipating body (100), wherein the first fluid piping (101) and the second fluid piping (102) are respectively constituted by one or more than one passage, located substantially within the heat absorbing or dissipating body (100); and
wherein the first fluid inlet (111) of the first fluid piping (101) is parallel connected with the second fluid inlet (121) of the second fluid piping (102) to receive the inflow of the thermal conductive fluid (110) and the first fluid outlet (112) of the first fluid piping (101) is parallel connected with the second fluid outlet (122) of the second fluid piping (102) to receive the outflow of the thermal conductive fluid (110); and
the first fluid piping (101) and the second fluid piping (102) are parallel or quasi-parallel distributed in a plane structure or three-dimensional structure in the heat absorbing or dissipating body (100), and the first fluid inlet (111) and the second fluid outlet (122) are installed at a first location adjacent to the heat absorbing or dissipating body (100), while the first fluid outlet (112) and the second fluid inlet (121) are installed on another location adjacent to the heat absorbing or dissipating body (100) thereby the thermal conductive fluids (110) in two circuits inside the first fluid piping (101) and the second fluid piping (102) being installed on the heat absorbing or dissipating body (100) are respectively transported in reverse directions to commonly allow the whole temperature difference of the heat absorbing or dissipating body (100) more uniformly distributed,
wherein the first fluid piping (101) and the second fluid piping (102) are constituted by one or more than one relationships as following, including:
(1) the heat absorbing or dissipating body (100) is in a assembled structure with at least one of the first fluid piping (101) and the second fluid piping (102);
(2) the heat absorbing or dissipating body (100) is in an integral structure with at least one of the first fluid piping (101) and the second fluid piping (102);
(3) the function of the heat absorbing or dissipating body (100) is directly provided by at least one of the first fluid piping (101) and the second fluid piping (102) **characterized in**:
a thermal conductive fluid passed and passively receiving heat absorbing or dissipating tubular structure body (100'), which is composed of one or more fluid piping, so as to perform a heat absorbing cooling energy discharge operating function or a dissipating warming energy discharge operating function.

2. The heat absorbing or dissipating device with multi-pipe reversely transported thermal conductive fluids as claimed in Claim 1, wherein the further constitutions include:
----First fluid piping (101), Second fluid piping (102): made of good thermal conductive material to constitute the common structural body for transferring thermal energy through the thermal conductive fluid (110) constituted by gaseous or liquid state liquid, gaseous to liquid state fluid, or liquid to gaseous state fluid to the passively heat dissipation or absorption receiving article in solid, or colloid, or liquid, or gaseous state or space (200), wherein the first fluid piping (101) and the second fluid piping (102) are respectively constituted by one or more than one circuits; the first fluid inlet (111) of the first fluid piping (101) is parallel connected with the second fluid inlet (121) of the second fluid piping (102) to receive inflow of the thermal conductive fluid (110), and the first fluid outlet (112) of the first fluid piping (101) is parallel connected with the second fluid outlet (122) of the second fluid piping (102) to receive outflow of the thermal conductive fluid (110), while the first fluid piping (101) and the second fluid piping (102) the first fluid piping (101) and the second fluid piping (102)appear in parallel or quasi-parallel distributed in a plane structure or three-dimensional structure to constitute the common structural body, wherein it is **characterized by** that the first fluid inlet (111) of the first fluid piping (101) and the second fluid outlet (122) of the second fluid piping (102) are installed at the location adjacent to their common structural body, while the first fluid outlet (112) of the first fluid piping (101) and the second fluid inlet (121) of the second fluid piping (102) are installed on the another location adjacent to their common structural body, thereby for the first fluid piping (101) and the second fluid piping (102) in the multiple pipes of the common structural body to transport two circuits of the thermal conductive fluid flows (110) respectively in reverse directions thereby making the whole temperature difference of their common structural body more uniformly distributed in the passively heat dissipation or absorption receiving tubular structure body (100') to perform heat absorption or dissipation onto the passively heat dissipation or absorption receiving tubular structure body (100').

3. The heat absorbing or dissipating device with multi-pipe reversely transported thermal conductive fluids as claimed in Claim 2, wherein the structural relationships between the passively heat dissipation or absorption receiving tubular structure body (100'), the first fluid piping (101) and the second fluid piping (102) include the following: the function of the heat absorbing or dissipating body (100) is directly provided by at least one of the first fluid piping (101) and the second fluid piping (102) to perform heat absorption or dissipation onto the passively heat dissipation or absorption receiving tubular structure body (100').

4. The heat absorbing or dissipating device with multi-pipe reversely transported thermal conductive fluids as claimed in Claim 2, wherein the heat absorbing or dissipating device with multi-pipe reversely transported thermal conductive fluids further uses the first fluid piping and the second fluid piping that using multi-pipe to reversely transport thermal conductive fluids to directly constitute the common structural body and to directly transfer thermal energy onto the passively heat dissipation or absorption receiving tubular structure body (100').

5. The heat absorbing or dissipating device with multi-pipe reversely transported thermal conductive fluids as claimed in Claim 1, wherein the heat absorbing or dissipating device with multi-pipe reversely transported thermal conductive fluids is further installed with the fluid inlets and the fluid outlets of the first fluid piping and the second fluid piping for reversely transporting thermal conductive fluids in temperature difference by multi-pipe at two sides of the piping, with same height or different height, respectively.

6. The heat absorbing or dissipating device with multi-pipe reversely transported thermal conductive fluids as claimed in Claim 1, wherein by the multiple pipes of the first fluid piping (101) and the second fluid piping (102), which are countercurrent to each other, being sequentially staggered for forming the heat absorbing or dissipating body (100), when the thermal conductive fluid (110) passes through the first fluid piping (101) with forward current and the second fluid piping (102) with reverse current, which are sequentially staggered, more uniform temperature distribution will be produced at two sides of the heat absorbing or dissipating body (100); the above first fluid piping (101) and/or second fluid piping (102) are straight pipes each with single segment or curved pipes each with at least one bending, and every bending segment of the first fluid piping (101) and the second fluid piping (102) are staggered in the order of mutual countercurrent.

7. The heat absorbing or dissipating device with multi-pipe reversely transported thermal conductive fluids as claimed in Claim 1, wherein the piping in the heat absorbing or dissipating device with multi-pipe reversely transported thermal conductive fluids is additionally installed with an independent thermal conductive plate (300), and/or a common thermal conductive plate (400), and/or a thermal conductive plate (350) with temperature insulating slots to improve effects of heat absorption or dissipation.

8. The heat absorbing or dissipating device with multi-pipe reversely transported thermal conductive fluids as claimed in Claim 6, wherein more uniform temperature distribution is produced at two sides of the heat absorbing or dissipating body (100); for further improving effects of heat absorption or dissipation, the first fluid piping (101) and/or the second fluid piping (102) is additionally installed with the independent thermal conductive plate (300) to increase heat absorption or dissipation area to improve effects of heat absorption or dissipation.

9. The heat absorbing or dissipating device with multi-pipe reversely transported thermal conductive fluids as claimed in Claim 1, wherein the fluid passing through the first fluid piping (101) and/or the thermal conductive fluid passed and passively receiving heat absorbing or dissipating tubular structure body (100') is controlled by control device (500) to drive two-way movement of fluid pumping device (600) for periodic forward/reverse pumping operation, to periodically forward/reverse pump the thermal conductive fluid (110), and to improve effects of uniform temperature; and
the above two-way movement of fluid pumping device (600) is used for periodic forward/reverse pumping under the control of control device composed of electromechanical device, electronic device, or microcomputer and related software.

10. The heat absorbing or dissipating device with multi-pipe reversely transported thermal conductive fluids as claimed in Claim 1, wherein the first fluid piping (101) and the second fluid piping (102) are constituted by an integral type structure of the piping made directly using the structure of the heat absorbing or dissipating body (100).

11. The heat absorbing or dissipating device with multi-pipe reversely transported thermal conductive fluids as claimed in Claim 1, wherein the three of first fluid piping (101), second fluid piping (102) and heat absorbing or dissipating body (100) are constituted by an assembled structure.

12. The heat absorbing or dissipating device with multi-pipe reversely transported thermal conductive fluids as claimed in Claim 1, wherein the heat absorbing or dissipating body (100) for combination with the first fluid piping (101) and the second fluid piping (102) is constituted by the structural unit of the single structural body in plate, block, or multi-fins shape, or the structural unit assembled by fins, and is constituted by at least one structural unit.

13. The heat absorbing or dissipating device with multi-pipe reversely transported thermal conductive fluids as claimed in Claim 1, wherein the three of the heat absorbing or dissipating body (100) constituted by solid, or colloid, or liquid, or gaseous state thermal conductive material, the first fluid piping (101) and the second fluid piping (102) are partly or all made to various geometric shapes while without changing the principles.

14. The heat absorbing or dissipating device with multi-pipe reversely transported thermal conductive fluids as claimed in Claim 1, wherein the thermal conductive fluid (110) passing through the first fluid piping (101) and the second fluid piping (102) is transported by pumping, evaporation, or heat-cold natural circulation.

15. The heat absorbing or dissipating device with multi-pipe reversely transported thermal conductive fluids as claimed in Claim 1, wherein the warming or cooling energy is discharged to the liquid state passively heat dissipation or absorption receiving tubular structure body (100') through using the cold-heat natural circulation of fluid in temperature difference or forced fluid pumping to generate thermal transfer function of heat convention, radiation or conduction; or the warming or cooling energy is discharged to the solid or colloidal or liquid or gaseous state passively heat dissipation or absorption receiving tubular structure body (100').

16. The heat absorbing or dissipating device with multi-pipe reversely transported thermal conductive fluids as claimed in Claim 1, wherein the thermal conductive fluid (110) passing through the first fluid piping (101) and the second fluid piping (102) is closed-loop circulated or open-loop released.

17. The heat absorbing or dissipating device with multi-pipe reversely transported thermal conductive fluids as claimed in Claim 1, wherein the fluid inlets and the fluid outlets of the various fluid piping are installed with same or different pointing direction within three-dimensional space.

18. The heat absorbing or dissipating device with multi-pipe reversely transported thermal conductive fluids as claimed in Claim 1, wherein there are various installation modes of the fluid piping, including that the fluid piping is composed of tubular structure; and/or the fluid piping is composed of plate sheet structure for fluid flow; and/or the pore-like fluid piping is composed of blocky structure for fluid flow.

19. The heat absorbing or dissipating device with multi-pipe reversely transported thermal conductive fluids as claimed in Claim 1, wherein the heat absorbing or dissipating device with multi-pipe reversely transported thermal conductive fluids is applied for various heat absorbing, or dissipating, or cooling heat conducting application devices, such as the cooling water radiators of the engine, heat absorbing cooling energy discharge device using thermal conductive fluid, or heat dissipating warming energy discharge device using thermal conductive fluid such as thermal energy, heater or thermal energy transfer devices for warming equipments, or heating or cooling for ceilings, walls or floors of the buildings, or cooling of photovoltaic panels, or heating or cooling for electrical machine or power machineries, or heat absorption and dissipation of various machine casings, heat pipe structures, structure casings, various chips or semiconductor components, ventilation devices, or the heat absorption, heat dissipation or thermal energy transfer of information, audio or image devices, or heat dissipation of various lamp or LED devices, or the heat absorption of the evaporator or heat dissipation or thermal energy transfer of condensers of air conditioning devices, or thermal energy transfer of mechanical devices, or heat dissipation of frictional heat loss, or heat dissipation or thermal energy transfer of electric heater or other electric heating home appliances or cooking devices, or heat absorption or thermal energy transfer of flame heating stoves or cooking devices, or heat absorption, heat dissipation or thermal energy transfer of earth layer or water thermal energy, plant or housing building or building material or building structure devices, heat absorbing or dissipation of water tower, or heat absorption, heat dissipation or thermal energy transfer of batteries of fuel cells; and
for thermal energy transfer in home appliances, industrial products, electronic products, electrical machines or mechanical devices, power generation equipments, buildings, air conditioning devices, industrial equipments or industrial manufacturing process.

## Patentansprüche

1. Wärmeaufnehmende oder wärmeableitende Vorrichtung mit über mehrere Rohrleitungen zurücktransportierten wärmeleitenden Flüssigkeiten, welche eine Vorrichtung ist, die derart angeordnet ist, dass sie wärmeleitende Flüssigkeiten durch einen wärmeaufnehmenden oder wärmeableitenden Körper leitet, wobei die mehreren Rohrleitungen mindestens eine erste Flüssigkeitsleitung und eine zweite Flüssigkeitsleitung umfassen, und die wärmeleitenden Flüssigkeiten jeweils zurücktransportieren, um eine Wärmeaufnahme- oder Wärmeableitungsfunktion auf einen passiv wärmeableitenden oder wärmeaufnehmenden empfangenden rohrförmigen Strukturkörper zu erzeugen, wodurch die wärmeleitenden Flüssigkeiten einen gleichmäßigeren Temperaturverteilungszustand auf dem wärmeaufnehmenden oder wärmeableitenden Körper bilden, wobei die Hauptkomponenten der Vorrichtung Folgendes beinhalten:
---- Wärmeaufnahme- oder Wärmeableitungskörper (100): aus wärmeleitendem Material in festem oder kolloidalem Zustand zum Aufnehmen der Wärmeenergie der wärmeleitenden Flüssigkeit (110), die aus gasförmiger oder flüssiger Flüssigkeit, gasförmiger zu flüssiger Flüssigkeit, oder flüssiger zu gasförmiger Flüssigkeit innerhalb der kombinierten ersten Flüssigkeitsleitung (101) und der zweiten Flüssigkeitsleitung (102) besteht;
---- Erste Flüssigkeitsleitung (101), zweite Flüssigkeitsleitung (102): aus einem gut wärmeleitenden Material zum Zurückleiten der wärmeleitenden Flüssigkeit (110) zum Übertragen von Wärmeenergie auf den Wärmeaufnahme- oder Wärmeableitungskörper (100), wobei die erste Flüssigkeitsleitung (101) und die zweite Flüssigkeitsleitung (102) jeweils aus einem oder mehreren Durchgängen bestehen, die im Wesentlichen innerhalb des Wärmeaufnahme- oder Wärmeableitungskörpers (100) angeordnet sind; und
wobei der erste Flüssigkeitseinlass (111) der ersten Flüssigkeitsleitung (101) parallel mit dem zweiten Flüssigkeitseinlass (121) der zweiten Flüssigkeitsleitung (102) verbunden ist, um den Zufluss der wärmeleitenden Flüssigkeit (110) zu empfangen und wobei der erste Flüssigkeitsauslass (112) der ersten Flüssigkeitsleitung (101) mit dem zweiten Flüssigkeitsauslass (122) der zweiten Flüssigkeitsleitung (102) parallel verbunden ist, um den Ausfluss der wärmeleitenden Flüssigkeit (110) aufzunehmen; und
wobei die erste Flüssigkeitsleitung (101) und die zweite Flüssigkeitsleitung (102) parallel oder quasi parallel in einer ebenen Struktur oder einer dreidimensionalen Struktur in dem Wärmeaufnahme- oder Wärmeableitungskörper (100) und dem ersten Flüssigkeitseinlass (111) verteilt sind und wobei der zweite Flüssigkeitsauslass (122) an einer ersten Stelle neben dem Wärmeaufnahme- oder Wärmeableitungskörper (100) installiert ist, während der erste Flüssigkeitsauslass (112) und der zweite Flüssigkeitseinlass (121) an einer anderen Stelle neben dem Wärmeaufnahme- oder Wärmeableitungskörper (100) installiert sind, wodurch die wärmeleitenden Flüssigkeiten (110) in zwei Kreisläufen innerhalb der ersten Flüssigkeitsleitung (101) und der zweiten Flüssigkeitsleitung (102), die an dem Wärmeaufnahme- oder Wärmeableitungskörper (100) installiert sind, jeweils in umgekehrten Richtungen transportiert werden, um gemeinsam die gesamte Temperaturdifferenz des Wärmeaufnahme- oder Wärmeableitungskörper (100) gleichmäßiger zu verteilen, wobei die erste Flüssigkeitsleitung (101) und die zweite Flüssigkeitsleitung (102) aus einem oder mehreren Beziehungen wie folgt ausgebildet sind, einschließlich:
(1) der Wärmeaufnahme- oder Wärmeableitungskörper (100) in einer zusammengesetzten Struktur mit mindestens einer der ersten Flüssigkeitsleitung (101) und der zweiten Flüssigkeitsleitung (102) vorliegt;
(2) der Wärmeaufnahme- oder Wärmeableitungskörper (100) in einer integralen Struktur mit mindestens einer der ersten Flüssigkeitsleitung (101) und der zweiten Flüssigkeitsleitung (102) vorliegt;
(3) die Funktion des Wärmeaufnahme- oder Wärmeableitungskörpers (100) direkt von mindestens der ersten Flüssigkeitsleitung (101) und der zweiten Flüssigkeitsleitung (102) bereitgestellt wird,
**dadurch gekennzeichnet, dass**:
eine wärmeleitende Flüssigkeit, die durch einen rohrförmigen Strukturkörper (100') geleitet wird und passiv Wärme aufnimmt, bestehend aus einer oder mehreren Flüssigkeitsleitungen, um eine Wärmeaufnahme-Kühlenergieableitung-Betriebsfunktion oder eine Wärmableitungsenergieableitung-Betriebsfunktion auszuführen.

2. Wärmeaufnehmende oder wärmeableitende Vorrichtung mit über mehrere Rohrleitungen zurücktransportierten wärmeleitenden Flüssigkeiten nach Anspruch 1, wobei die weiteren Strukturen Folgendes beinhalten:
---- Erste Flüssigkeitsleitung (101), Zweite Flüssigkeitsleitung (102): aus einem gut wärmeleitenden Material, um den gemeinsamen Strukturkörper auszubilden, um Wärmeenergie durch die wärmeleitende Flüssigkeit (110), das aus gasförmigem oder flüssigem Flüssigkeit, gasförmigem zu flüssigem Flüssigkeit oder flüssigem zu gasförmigem Flüssigkeit besteht, zu dem passiv wärmeableitenden oder wärmeaufnehmenden Gegenstand in festem oder kolloidalem oder flüssigem oder gasförmigem Zustand oder Raum (200) zu übertragen, wobei die erste Flüssigkeitsleitung (101) und die zweite Flüssigkeitsleitung (102) jeweils aus einem oder mehreren Kreisläufen bestehen; wobei der erste Flüssigkeitseinlass (111) der ersten Flüssigkeitsleitung (101) parallel mit dem zweiten Flüssigkeitseinlass (121) der zweiten Flüssigkeitsleitung (102) verbunden ist, um den Zufluss der wärmeleitenden Flüssigkeit (110) zu empfangen und wobei der erste Flüssigkeitsauslass (112) der ersten Flüssigkeitsleitung (101) mit dem zweiten Flüssigkeitsauslass (122) der zweiten Flüssigkeitsleitung (102) parallel verbunden ist, um den Ausfluss der wärmeleitenden Flüssigkeit (110) aufzunehmen; während die erste Flüssigkeitsleitung (101) parallel und die zweite Flüssigkeitsleitung (102), die erste Flüssigkeitsleitung (101) und die zweite Flüssigkeitsleitung (102) parallel oder quasi parallel verteilt in einer ebenen Struktur oder in einer dreidimensionalen Struktur erscheinen, um den gemeinsamen Strukturkörper auszubilden, wobei sie **dadurch gekennzeichnet ist, dass** der erste Flüssigkeitseinlass (111) der ersten Flüssigkeitsleitung (101) und der zweite Flüssigkeitsauslass (122) der zweiten Flüssigkeitsleitung (102) an der Position neben ihrem gemeinsamen Strukturkörper installiert sind, während der erste Flüssigkeitsauslass (112) der ersten Flüssigkeitsleitung (101) und der zweite Flüssigkeitseinlass (121) der zweiten Flüssigkeitsleitung (102) an der anderen Position neben ihrem gemeinsamen Strukturkörper installiert ist, wodurch die erste Flüssigkeitsleitung (101) und die zweite Flüssigkeitsleitung (102) in den mehreren Rohrleitungen des gemeinsamen Strukturkörpers zwei Kreisläufe der wärmeleitenden Flüssigkeitsströme (110) jeweils in umgekehrter Richtung transportieren, wodurch der gesamte Temperaturunterschied ihres gemeinsamen Strukturkörpers in dem passiv wärmeableitenden oder wärmeaufnehmenden empfangenden rohrförmigen Strukturkörper (100') gleichmäßiger verteilt wird, um eine Wärmeaufnahme oder - ableitung auf den passiv wärmeaufnehmenden oder wärmeableitenden empfangenden rohrförmigen Strukturkörper (100') durchzuführen.

3. Wärmeaufnehmende oder wärmeableitende Vorrichtung mit über mehrere Rohrleitungen zurücktransportierten wärmeleitenden Flüssigkeiten nach Anspruch 2, wobei die strukturellen Beziehungen zwischen dem passiven wärmeableitenden oder wärmeaufnehmenden empfangenden rohrförmigen Strukturkörper (100'), der ersten Flüssigkeitsleitung (101) und der zweiten Flüssigkeitsleitung (102) Folgendes beinhalten:
die Funktion des wärmeaufnehmenden oder wärmeableitenden Körpers (100) wird direkt durch mindestens einer der ersten Flüssigkeitsleitung (101) und der zweiten Flüssigkeitsleitung (102) bereitgestellt, um eine Wärmeaufnahme oder eine Wärmeableitung auf dem passiven wärmeableitenden oder wärmeaufnehmenden empfangenden rohrförmigen Strukturkörper (100') durchzuführen.

4. Wärmeaufnehmende oder wärmeableitende Vorrichtung mit über mehrere Rohrleitungen zurücktransportierten wärmeleitenden Flüssigkeiten nach Anspruch 2, wobei die wärmeaufnehmende oder wärmeableitende Vorrichtung mit über mehrere Rohrleitungen zurücktransportierten wärmeleitenden Flüssigkeiten ferner die erste Flüssigkeitsleitung und die zweite Flüssigkeitsleitung verwendet, welche die mehreren Rohrleitungen verwenden, um wärmeleitende Flüssigkeiten zurückzutransportieren, um direkt den gemeinsamen Strukturkörper auszubilden und um Wärmeenergie auf den passiv wärmeableitenden oder wärmeaufnehmenden empfangenden rohrförmigen Strukturkörper (100') direkt zu übertragen.

5. Wärmeaufnehmende oder wärmeableitende Vorrichtung mit über mehrere Rohrleitungen zurücktransportierten wärmeleitenden Flüssigkeiten nach Anspruch 1, wobei die wärmeaufnehmende oder wärmeableitende Vorrichtung mit über mehrere Rohrleitungen zurücktransportierten wärmeleitenden Flüssigkeiten ferner mit den Flüssigkeitseinlass- und den Fluidauslassleitungen der ersten Flüssigkeitsleitung und der zweiten Flüssigkeitsleitung zum Zurücktranspostiren von wärmeleitenden Flüssigkeiten in Temperaturdifferenz durch mehreren Rohrleitungen an zwei Seiten der Leitung jeweils mit gleicher Höhe oder unterschiedlicher Höhe installiert ist.

6. Wärmeaufnehmende oder wärmeableitende Vorrichtung mit über mehrere Rohrleitungen zurücktransportierten wärmeleitenden Flüssigkeiten nach Anspruch 1, wobei wenn die mehreren Rohrleitungen der ersten Flüssigkeitsleitung (101) und der zweiten Flüssigkeitsleitung (102), die im Gegenstrom zueinander stehen, aufeinanderfolgend versetzt sind, um den Wärmeaufnahme- oder Wärmeableitungskörper (100) auszubilden, eine gleichmäßigere Temperaturverteilung an zwei Seiten des Wärmeaufnahme- oder Wärmeableitungskörpers (100) erzeugt wird, wenn die wärmeleitende Flüssigkeit (110) durch die erste Flüssigkeitsleitung (101) mit Vorwärtsstrom und durch die zweite Flüssigkeitsleitung (102) mit Rückwärtsstrom durchläuft, wobei diese aufeinanderfolgend versetzt sind;
wobei die oben genannte erste Flüssigkeitsleitung (101) und/oder Flüssigkeitsleitung (102) gerade Rohrleitungen mit jeweils einem Segment oder gekrümmte Rohrleitungen mit jeweils mindestens einer Biegung und jedem Biegesegment der ersten Flüssigkeitsleitung (101) und der zweiten Flüssigkeitsleitung (102) in der Reihenfolge des gegenseitigen Gegenstroms versetzt sind.

7. Wärmeaufnehmende oder wärmeableitende Vorrichtung mit über mehrere Rohrleitungen zurücktransportierten wärmeleitenden Flüssigkeiten, nach Anspruch 1, wobei die wärmeaufnehmende oder wärmeableitende Leitung mit über mehrere Rohrleitungen zurücktransportierten wärmeleitenden Flüssigkeiten zusätzlich mit einer unabhängigen wärmeleitende Platte (300) und/oder einer gemeinsamen wärmeleitenden Platte (400) und/oder einer wärmeleitenden Platte (350) mit temperaturisolierenden Schlitzen, um die Auswirkungen der Wärmeaufnahme oder -ableitung zu verbessern.

8. Wärmeaufnehmende oder wärmeableitende Vorrichtung mit über mehrere Rohrleitungen zurücktransportierten wärmeleitenden Flüssigkeiten nach Anspruch 6, wobei eine gleichmäßigere Temperaturverteilung an zwei Seiten des wärmeaufnehmenden oder wärmeableitenden Körpers (100) erzeugt wird;
wobei zur weiteren Verbesserung der Wirkungen der Wärmeaufnahme oder Wärmeableitung die erste Flüssigkeitsleitung (101) und/oder die zweite Flüssigkeitsleitung (102) zusätzlich mit der unabhängigen wärmeleitenden Platte (300) installiert sind, um die Wärmeaufnahme- oder Wärmeableitungsfläche zu erhöhen, um die Wirkungen der Wärmeaufnahme oder Wärmeableitung zu verbessern.

9. Wärmeaufnehmende oder wärmeableitende Vorrichtung mit über mehrere Rohrleitungen zurücktransportierten wärmeleitenden Flüssigkeiten nach Anspruch 1, wobei die Flüssigkeit, die durch die erste Flüssigkeitsleitung (101) verläuft, und/oder die wärmeleitende Flüssigkeit, die durch einen rohrförmigen Strukturkörper (100') geleitet wird und passiv Wärme aufnimmt oder ableitet, durch die Steuervorrichtung (500) gesteuert wird, um die Zweiwege-Bewegung der Flüssigkeitspumpvorrichtung (600) für den periodischen Vorwärts-/Rückwärtspumpbetrieb anzutreiben, um die wärmeleitende Flüssigkeit (110) periodisch vorwärts/rückwärts zu pumpen, und um die Wirkung einer gleichmäßigen Temperatur zu verbessern; und
wobei die obige Zweiwege-Bewegung der Flüssigkeitspumpvorrichtung (600) zum periodischen Vorwärts-/Rückwärtspumpen unter der Steuerung einer Steuervorrichtung verwendet wird, die aus einer elektromechanischen Vorrichtung, einer elektronischen Vorrichtung oder einem Mikrocomputer und zugehöriger Software zusammengesetzt ist.

10. Wärmeaufnehmende oder wärmeableitende Vorrichtung mit über mehrere Rohrleitungen zurücktransportierten wärmeleitenden Flüssigkeiten nach Anspruch 1, wobei die erste Flüssigkeitsleitung (101) und die zweite Flüssigkeitsleitung (102) die Rohrleitungen mit einer Struktur des integralen Typs ausgebildet sind, die direkt unter Verwendung der Struktur des Wärmeaufnahme- oder Wärmeableitungskörpers (100) hergestellt sind.

11. Wärmeaufnehmende oder wärmeableitende Vorrichtung mit über mehrere Rohrleitungen zurücktransportierten wärmeleitenden Flüssigkeiten nach Anspruch 1, **dadurch gekennzeichnet, dass** die drei der ersten Flüssigkeitsleitung (101), der zweiten Flüssigkeitsleitung (102) und des wärmeableitenden oder wärmeaufnehmenden Körpers (100) aus einer zusammengesetzten Struktur bestehen.

12. Wärmeaufnehmende oder wärmeableitende Vorrichtung mit über mehrere Rohrleitungen zurücktransportierten wärmeleitenden Flüssigkeiten nach Anspruch 1, wobei der wärmeableitende oder wärmeaufnehmende Körper (100) zur Verbindung mit der ersten Flüssigkeitsleitung (101) und der zweiten Flüssigkeitsleitung (102) aus der Struktureinheit des einzelnen Strukturkörpers in Platten-, Block- oder Mehrrippenform oder aus der Struktureinheit, die aus Rippen zusammengesetzt ist, ausgebildet ist und aus mindestens einer Struktureinheit besteht.

13. Wärmeaufnehmende oder wärmeableitende Vorrichtung mit über mehrere Rohrleitungen zurücktransportierten wärmeleitenden Flüssigkeiten nach Anspruch 1, **dadurch gekennzeichnet, dass** die drei von dem wärmeaufnehmenden oder wärmeableitenden Körper (100), der durch wärmeleitende Materialien im festen oder kolloidalen oder flüssigen oder gasförmigen Zustand ausgebildet ist, der ersten Flüssigkeitsleitung (101) und der zweiten Flüssigkeitsleitung (102) teilweise oder vollständig in verschiedenen geometrischen Formen hergestellt werden, ohne die Prinzipien zu ändern.

14. Wärmeaufnehmende oder wärmeableitende Vorrichtung mit über mehrere Rohrleitungen zurücktransportierten wärmeleitenden Flüssigkeiten nach Anspruch 1, wobei die wärmeleitende Flüssigkeit (110), die durch die erste Flüssigkeitsleitung (101) und die zweite Flüssigkeitsleitung (102) verläuft, durch Pumpen, Verdampfung oder Wärme-Kälte-Kreislauf transportiert wird.

15. Die in Anspruch 1 beanspruchten wärmeaufnehmende oder wärmeableitende Vorrichtung mit über mehrere Rohrleitungen rücktransportierten wärmeleitenden Flüssigkeiten, wobei die Aufwärmungs- oder Kühlungsenergie im flüssigen Zustand durch einen rohrförmigen Strukturkörper (100') geleitet wird und passiv Wärme unter Verwendung der natürlichen Kalt-Warm-Zirkulation von Flüssigkeit bei Temperaturunterschieden oder erzwungenem Pumpen von Flüssigkeit aufnimmt oder ableitet, um eine Wärmeübertragungsfunktion des Wärmekonventions-, Strahlungs- oder Wärmeleitungstyps zu erzeugen; oder
wobei die Wärme- oder Kühlungsenergie dem passiv wärmeableitenden oder wärmeaufnehmenden empfangenden rohrförmigen Strukturkörper (100') im festen oder kolloidalen oder flüssigen oder gasförmigen Zustand abgegeben wird.

16. Wärmeaufnehmende oder wärmeableitende Vorrichtung mit über mehrere Rohrleitungen rücktransportierten wärmeleitenden Flüssigkeiten nach Anspruch 1,
wobei die wärmeleitende Flüssigkeit (110) durch die erste Flüssigkeitsleitung (101) verläuft und die zweite Flüssigkeitsleitung (102) im geschlossenen Kreislauf geführt oder im offenen Kreislauf freigegeben wird.

17. Wärmeaufnehmende oder wärmeableitende Vorrichtung mit über mehrere Rohrleitungen zurücktransportierten wärmeleitenden Flüssigkeiten nach Anspruch 1, wobei die Flüssigkeitseinlässe und Flüssigkeitsauslässe der verschiedenen Flüssigkeitsleitungen mit gleicher oder unterschiedlicher Zielrichtung innerhalb eines dreidimensionalen Raumes installiert sind.

18. Wärmeaufnehmende oder wärmeableitende Vorrichtung mit über mehrere Rohrleitungen zurücktransportierten wärmeleitenden Flüssigkeiten nach Anspruch 1, wobei es verschiedene Installationsformen der Flüssigkeitsleitung gibt, einschließlich, dass die Flüssigkeitsleitung aus einer rohrförmigen Struktur besteht; und/oder
dass die Flüssigkeitsleitung aus einer Plattenblechstruktur für den Flüssigkeitsstrom besteht; und/oder
dass die porenartige Flüssigkeitsleitung aus einer blockartigen Struktur für den Flüssigkeitsstrom besteht.

19. Wärmeaufnehmende oder wärmeableitende Vorrichtung mit über mehrere Rohrleitungen zurücktransportierten wärmeleitenden Flüssigkeiten wie in Anspruch 1, wobei die wärmeaufnehmende oder wärmeableitende Vorrichtung mit über mehrere Rohrleitungen zurücktransportierten wärmeleitenden Flüssigkeiten für verschiedene wärmeaufnehmende, wärmeableitende Anwendungsvorrichtungen oder für Kühlungsvorrichtungen für wärmeleitende Anwendungsvorrichtungen angewandt wird, wie beispielsweise Kühlwasserkühler des Motors, wärmeaufnehmende Kühlenergieableitungsvorrichtungen unter Verwendung von wärmeleitender Flüssigkeit, oder wärmeableitende Wärmeenergieableitungs-Vorrichtungen unter Verwendung von wärmeleitender Flüssigkeit wie Wärmeenergie, Heizvorrichtungen oder Wärmeenergieübertragungs-Vorrichtungen zum Heizen von Geräten, oder zum Heizen oder Kühlen von Decken, Wänden oder Böden von Gebäuden oder zum Kühlen von Photovoltaik-Modulen oder zum Heizen oder Kühlen von elektrischen Maschinen oder Kraftmaschinen oder zur Wärmeaufnahme, Wärmeableitung oder Wärmeenergieübertragung von Informationen-, Audio- oder Bildvorrichtungen oder Wärmeableitung verschiedener Lampen- oder LED-Geräte, oder Wärmeaufnahme des Verdampfers oder Wärmeableitung oder Wärmeenergieübertragung von Kondensatoren von Klimaanlagengeräten, oder Wärmeenergieübertragung von mechanischen Geräten, oder Wärmeableitung von Reibungswärmeverlusten, oder Wärmeableitung oder Wärmeenergieübertragung von elektrischen Heizgeräten oder anderen elektrischen Heizgeräten oder Kochgeräten, oder Wärmeaufnahme oder Wärmeenergieübertragung von Flammenheizöfen oder Kochgeräten, oder Wärmeaufnahme, Wärmeableitung oder Wärmeenergieübertragung von Erdschicht- oder Wasserwärmeenergie, Anlagen- oder Wohngebäuden oder Baustoffen oder Bauelementen, Wärmeaufnahme oder Wärmeableitung von Wassertürmen oder Wärmeaufnahme, Wärmeableitung oder Wärmeübertragung von Batterien von Brennstoffzellen; und
zum Übertragen von Wärmeenergie in Haushaltsgeräten, Industrieprodukten, elektronischen Produkten, elektrischen Maschinen oder mechanischen Geräten, Energieerzeugungsanlagen, Gebäuden, Klimaanlagen, Industrieanlagen oder industriellen Herstellungsverfahren.

## Revendications

1. Dispositif d'absorption ou de dissipation de chaleur doté de fluides thermoconducteurs transportés à contre-courant dans de multiples tuyaux, qui est un dispositif agencé pour faire passer des fluides thermoconducteurs à travers un corps d'absorption ou de dissipation de chaleur, dans lequel les multiples tuyaux comprennent au moins une première tuyauterie de fluide et une seconde tuyauterie de fluide, et transportent respectivement les fluides thermoconducteurs à contre-courant, de manière à produire une fonction d'absorption ou de dissipation de chaleur sur un corps de structure tubulaire de réception passive de dissipation ou d'absorption de chaleur, de sorte que les fluides thermoconducteurs forment un état de distribution de température plus uniforme sur le corps d'absorption ou de dissipation de chaleur, les principaux composants de l'appareil comprenant :
---- un corps d'absorption ou de dissipation de chaleur (100) : constitué d'un matériau thermoconducteur à l'état solide ou colloïdal destiné à recevoir l'énergie thermique du fluide thermoconducteur (110) constitué par un fluide à l'état gazeux ou liquide, un fluide à l'état gazeux à liquide, ou un fluide à l'état liquide à gazeux à l'intérieur de la première tuyauterie de fluide (101) et de la seconde tuyauterie de fluide (102) combinées ;
---- une première tuyauterie de fluide (101), une seconde tuyauterie de fluide (102) : constituées d'un bon matériau thermoconducteur destiné à faire passer à contre-courant le fluide thermoconducteur (110) pour transférer l'énergie thermique au corps d'absorption ou de dissipation de chaleur (100), dans lequel la première tuyauterie de fluide (101) et la seconde tuyauterie de fluide (102) sont respectivement constituées par un ou plusieurs passages, se trouvant sensiblement à l'intérieur du corps d'absorption ou de dissipation de chaleur (100) ; et
dans lequel la première entrée de fluide (111) de la première tuyauterie de fluide (101) est reliée en parallèle à la seconde entrée de fluide (121) de la seconde tuyauterie de fluide (102) pour recevoir l'entrée du fluide thermoconducteur (110) et la première sortie de fluide (112) de la première tuyauterie de fluide (101) est reliée en parallèle à la seconde sortie de fluide (122) de la seconde tuyauterie de fluide (102) pour recevoir la sortie du fluide thermoconducteur (110) ; et
la première tuyauterie de fluide (101) et la seconde tuyauterie de fluide (102) sont réparties de manière parallèle ou quasi-parallèle dans une structure plane ou une structure tridimensionnelle dans le corps d'absorption ou de dissipation de chaleur (100), et la première entrée de fluide (111) et la seconde sortie de fluide (122) sont installées à un premier emplacement adjacent au corps d'absorption ou de dissipation de chaleur (100), tandis que la première sortie de fluide (112) et la seconde entrée de fluide (121) sont installées à un autre emplacement adjacent au corps d'absorption ou de dissipation de chaleur (100), les fluides thermoconducteurs (110) dans deux circuits à l'intérieur de la première tuyauterie de fluide (101) et de la seconde tuyauterie de fluide (102) étant installés sur le corps d'absorption ou de dissipation de chaleur (100) sont ainsi transportés respectivement dans des directions inverses pour permettre couramment à la différence de température entière du corps d'absorption ou de dissipation de chaleur (100) d'être répartie plus uniformément, dans lequel la première tuyauterie de fluide (101) et la seconde tuyauterie de fluide (102) sont constituées par une ou plusieurs relations comme suit, comprenant :
(1) le corps d'absorption ou de dissipation de chaleur (100) est dans une structure assemblée avec la première tuyauterie de fluide (101) et/ou la seconde tuyauterie de fluide (102) ;
(2) le corps d'absorption ou de dissipation de chaleur (100) est dans une structure intégrale avec la première tuyauterie de fluide (101) et/ou la seconde tuyauterie de fluide (102) ;
(3) la fonction du corps d'absorption ou de dissipation de chaleur (100) est directement assurée par la première tuyauterie de fluide (101) et/ou la seconde tuyauterie de fluide (102)
**caractérisé :**
**en ce qu'**un fluide thermoconducteur passé et un corps de structure tubulaire de réception passive d'absorption ou de dissipation de chaleur (100'), qui est composé d'une ou de plusieurs tuyauteries de fluide, de manière à exécuter une fonction d'actionnement de décharge d'énergie de refroidissement d'absorption de chaleur ou d'une fonction d'actionnement de décharge d'énergie de réchauffement de dissipation de chaleur.

2. Dispositif d'absorption ou de dissipation de chaleur doté de fluides thermoconducteurs transportés à contre-courant dans de multiples tuyaux selon la revendication 1, dans lequel les autres constitutions comprennent :
---- une première tuyauterie de fluide (101), une seconde tuyauterie de fluide (102) : constituées d'un bon matériau thermoconducteur destiné à constituer le corps structurel commun afin de transférer l'énergie thermique à travers le fluide thermoconducteur (110) constitué par un liquide à l'état gazeux ou liquide, un fluide à l'état gazeux à liquide ou un fluide à l'état liquide à gazeux à l'article recevant passivement la dissipation ou l'absorption de chaleur dans un état ou un espace solide, ou colloïde, ou liquide ou gazeux (200), dans lequel la première tuyauterie de fluide (101) et la seconde tuyauterie de fluide (102) sont respectivement constituées par un ou plusieurs circuits ; la première entrée de fluide (111) de la première tuyauterie de fluide (101) est reliée en parallèle à la seconde entrée de fluide (121) de la seconde tuyauterie de fluide (102) afin de recevoir l'entrée du fluide thermoconducteur (110), et la première sortie de fluide (112) de la première tuyauterie de fluide (101) est reliée en parallèle à la seconde sortie de fluide (122) de la seconde tuyauterie de fluide (102) afin de recevoir la sortie du fluide thermoconducteur (110), tandis que la première tuyauterie de fluide (101) et la seconde tuyauterie de fluide (102), la première tuyauterie de fluide (101) et la seconde tuyauterie de fluide (102) apparaissent réparties de manière parallèle ou quasi-parallèle dans une structure plane ou une structure tridimensionnelle afin de constituer le corps structurel commun, dans lequel il est **caractérisé en ce que** la première entrée de fluide (111) de la première tuyauterie de fluide (101) et la seconde sortie de fluide (122) de la seconde tuyauterie de fluide (102) sont installées à l'emplacement adjacent à leur corps structurel commun, tandis que la première sortie de fluide (112) de la première tuyauterie de fluide (101) et la seconde entrée de fluide (121) de la seconde tuyauterie de fluide (102) sont installées sur un autre emplacement adjacent à leur corps structurel commun, transportant ainsi, pour la première tuyauterie de fluide (101) et la seconde tuyauterie de fluide (102) dans les multiples tuyaux du corps structurel commun, deux circuits des écoulements de fluide thermoconducteur (110) respectivement dans des directions inverses, rendant ainsi la différence de température entière de leur corps structurel commun plus uniformément répartie dans le corps de structure tubulaire de réception passive de dissipation ou d'absorption de chaleur (100') afin d'effectuer une absorption ou une dissipation de chaleur sur le corps de structure tubulaire de réception passive d'absorption ou de dissipation de chaleur (100').

3. Dispositif d'absorption ou de dissipation de chaleur doté de fluides thermoconducteurs transportés à contre-courant dans de multiples tuyaux selon la revendication 2, dans lequel les relations structurelles entre le corps de structure tubulaire de réception passive de dissipation ou d'absorption de chaleur (100'), la première tuyauterie de fluide (101) et la seconde tuyauterie de fluide (102) comprennent les éléments suivants :
la fonction du corps d'absorption ou de dissipation de chaleur (100) est directement assurée par la première tuyauterie de fluide (101) et/ou la seconde tuyauterie de fluide (102) afin d'effectuer l'absorption ou la dissipation de chaleur sur le corps de structure tubulaire de réception passive de dissipation ou d'absorption de chaleur (100').

4. Dispositif d'absorption ou de dissipation de chaleur doté de fluides thermoconducteurs transportés à contre-courant dans de multiples tuyaux selon la revendication 2, le dispositif d'absorption ou de dissipation de chaleur doté de fluides thermoconducteurs transportés à contre-courant dans de multiples tuyaux utilisant en outre la première tuyauterie de fluide et la seconde tuyauterie de fluide utilisant de multiples tuyaux pour transporter à contre-courant des fluides thermoconducteurs pour constituer directement le corps structurel commun et pour transférer directement l'énergie thermique sur le corps de structure tubulaire de réception passive de dissipation ou d'absorption de chaleur (100').

5. Dispositif d'absorption ou de dissipation de chaleur doté de fluides thermoconducteurs transportés à contre-courant dans de multiples tuyaux selon la revendication 1, le dispositif d'absorption ou de dissipation de chaleur doté de fluides thermoconducteurs transportés à contre-courant dans de multiples tuyaux étant en outre installé avec les entrées de fluide et les sorties de fluide de la première tuyauterie de fluide et de la seconde tuyauterie de fluide pour transporter à contre-courant des fluides thermoconducteurs à différentes températures par de multiples tuyaux sur deux côtés de la tuyauterie, avec la même hauteur ou une hauteur différente, respectivement.

6. Dispositif d'absorption ou de dissipation de chaleur doté de fluides thermoconducteurs transportés à contre-courant dans de multiples tuyaux selon la revendication 1, dans lequel les multiples tuyaux de la première tuyauterie de fluide (101) et de la seconde tuyauterie de fluide (102), qui sont à contre-courant, sont échelonnés de manière séquentielle pour former le corps d'absorption ou de dissipation de chaleur (100) lorsque le fluide thermoconducteur (110) traverse la première tuyauterie de fluide (101) de courant avant et la seconde tuyauterie de fluide (102) de courant inverse, qui sont échelonnés de manière séquentielle, une distribution de température plus uniforme sera produite sur les deux côtés du corps d'absorption ou de dissipation de chaleur (100) ;
la première tuyauterie de fluide (101) et/ou la seconde tuyauterie de fluide (102) ci-dessus sont des tuyaux droits comportant chacun un seul segment ou des tuyaux incurvés chacun présentant au moins une flexion, et chaque segment de flexion de la première tuyauterie de fluide (101) et de la seconde fluide la tuyauterie (102) est échelonné dans l'ordre de contre-courant mutuel.

7. Dispositif d'absorption ou de dissipation de chaleur doté de fluides thermoconducteurs transportés à contre-courant dans de multiples tuyaux selon la revendication 1, dans lequel la tuyauterie dans le dispositif d'absorption ou de dissipation de chaleur doté de fluides thermoconducteurs transportés à contre-courant dans de multiples tuyaux est en outre installée avec une plaque thermoconductrice indépendante (300) et/ou une plaque thermoconductrice commune (400), et/ou une plaque thermoconductrice (350) comportant des fentes d'isolation thermique pour améliorer les effets d'absorption ou de dissipation de chaleur.

8. Dispositif d'absorption ou de dissipation de chaleur doté de fluides thermoconducteurs transportés à contre-courant dans de multiples tuyaux selon la revendication 6, dans lequel une distribution de température plus uniforme est produite sur les deux côtés du corps d'absorption ou de dissipation de chaleur (100) ;
afin d'améliorer en outre les effets d'absorption ou de dissipation de chaleur, la première tuyauterie de fluide (101) et/ou la seconde tuyauterie de fluide (102) sont en outre installées avec la plaque thermoconductrice indépendante (300) pour augmenter la zone d'absorption ou de dissipation de chaleur afin d'améliorer les effets d'absorption ou de dissipation de chaleur.

9. Dispositif d'absorption ou de dissipation de chaleur doté de fluides thermoconducteurs transportés à contre-courant dans de multiples tuyaux selon la revendication 1, dans lequel le fluide traversant la première tuyauterie de fluide (101) et/ou le fluide thermoconducteur passé et un corps de structure tubulaire de réception passive d'absorption ou de dissipation de chaleur (100') est commandé par un dispositif de commande (500) pour entraîner un mouvement bidirectionnel du dispositif de pompage de fluide (600) pour un actionnement périodique de pompage avant/arrière, pour pomper périodiquement en avant/arrière le fluide thermoconducteur (110), et pour améliorer les effets d'une température uniforme ; et
le mouvement bidirectionnel du dispositif de pompage de fluide (600) ci-dessus est utilisé pour le pompage périodique avant/arrière par la commande d'un dispositif de commande composé d'un dispositif électromécanique, d'un dispositif électronique ou d'un micro-ordinateur et d'un logiciel associé.

10. Dispositif d'absorption ou de dissipation de chaleur doté de fluides thermoconducteurs transportés à contre-courant dans de multiples tuyaux selon la revendication 1, dans lequel la première tuyauterie de fluide (101) et la seconde tuyauterie de fluide (102) sont constituées par une structure de type intégral de la tuyauterie réalisée directement à l'aide de la structure du corps d'absorption ou de dissipation de chaleur (100).

11. Dispositif d'absorption ou de dissipation de chaleur doté de fluides thermoconducteurs transportés à contre-courant dans de multiples tuyaux selon la revendication 1, dans lequel la première tuyauterie de fluide (101), la seconde tuyauterie de fluide (102) et le corps d'absorption ou de dissipation de chaleur (100) sont tous les trois constitués d'une structure assemblée.

12. Dispositif d'absorption ou de dissipation de chaleur doté de fluides thermoconducteurs transportés à contre-courant dans de multiples tuyaux selon la revendication 1, dans lequel le corps d'absorption ou de dissipation de chaleur (100), pour la combinaison à la première tuyauterie de fluide (101) et la seconde tuyauterie de fluide (102), est constitué par l'unité structurelle du corps structurel unique en forme de plaque, de bloc ou de multiples ailettes, ou l'unité structurelle assemblée par des ailettes, et est constitué par au moins une unité structurelle.

13. Dispositif d'absorption ou de dissipation de chaleur doté de fluides thermoconducteurs transportés à contre-courant dans de multiples tuyaux selon la revendication 1, dans lequel les trois corps d'absorption ou de dissipation de chaleur (100) sont constitués par un matériau thermoconducteur à l'état solide, ou colloïde, ou liquide, ou gazeux, la première tuyauterie de fluide (101) et la seconde tuyauterie de fluide (102) sont partiellement ou entièrement réalisés selon diverses formes géométriques sans changer les principes.

14. Dispositif d'absorption ou de dissipation de chaleur doté de fluides thermoconducteurs transportés à contre-courant dans de multiples tuyaux selon la revendication 1, dans lequel le fluide thermoconducteur (110) traversant la première tuyauterie de fluide (101) et la seconde tuyauterie de fluide (102) est transporté par pompage, évaporation ou par circulation naturelle chaud-froid.

15. Dispositif d'absorption ou de dissipation de chaleur doté de fluides thermoconducteurs transportés à contre-courant dans de multiples tuyaux selon la revendication 1, dans lequel l'énergie de réchauffement ou de refroidissement est déchargée vers le corps de structure tubulaire de réception passive de dissipation ou d'absorption de chaleur (100') à l'état liquide par l'utilisation de la circulation naturelle chaud-froid du fluide à des températures différentes ou le pompage de fluide forcé afin de générer une fonction de transfert thermique de convention, de rayonnement ou de conduction de chaleur ; ou
l'énergie de réchauffement ou de refroidissement est déchargée vers le corps de structure tubulaire de réception passive de dissipation ou d'absorption de chaleur (100') à l'état liquide.

16. Dispositif d'absorption ou de dissipation de chaleur doté de fluides thermoconducteurs transportés à contre-courant dans de multiples tuyaux selon la revendication 1, dans lequel le fluide thermoconducteur (110) traversant la première tuyauterie de fluide (101) et la seconde tuyauterie de fluide (102) circule en boucle fermée ou est libéré en boucle ouverte.

17. Dispositif d'absorption ou de dissipation de chaleur doté de fluides thermoconducteurs transportés à contre-courant dans de multiples tuyaux selon la revendication 1, dans lequel les entrées de fluide et les sorties de fluide des diverses tuyauteries de fluide sont installées avec une direction de pointage identique ou différente à l'intérieur d'un espace tridimensionnel.

18. Dispositif d'absorption ou de dissipation de chaleur doté de fluides thermoconducteurs transportés à contre-courant dans de multiples tuyaux selon la revendication 1, dans lequel il existe divers modes d'installation de la tuyauterie de fluide, comprenant le fait que la tuyauterie de fluide est composée d'une structure tubulaire ; et/ou que
la tuyauterie de fluide est composée d'une structure de feuille en plaque pour l'écoulement de fluide ; et/ou
la tuyauterie de fluide en forme de pore est composée d'une structure en bloc pour l'écoulement de fluide.

19. Dispositif d'absorption ou de dissipation de chaleur doté de fluides thermoconducteurs transportés à contre-courant dans de multiples tuyaux selon la revendication 1, dans lequel le dispositif d'absorption ou de dissipation de chaleur doté de fluides thermoconducteurs transportés à contre-courant dans de multiples tuyaux est appliqué pour divers dispositifs d'application thermoconducteurs d'absorption ou de dissipation de chaleur, ou de refroidissement, tels que les radiateurs d'eau de refroidissement du moteur, un dispositif de décharge d'énergie de refroidissement d'absorption de la chaleur utilisant un fluide thermoconducteur, ou un dispositif de décharge d'énergie de réchauffement de dissipation de chaleur utilisant un fluide thermoconducteur tel que de l'énergie thermique, un dispositif de chauffage ou des dispositifs de transfert d'énergie thermique pour chauffer des équipements, ou pour chauffer ou refroidir des plafonds, des murs ou des sols de bâtiments, ou pour refroidir des panneaux photovoltaïques, ou pour le chauffage ou le refroidissement des machines électriques ou des machines motrices, ou l'absorption et la dissipation de chaleur de divers carters de machines, structures de caloducs, structures de boîtiers, puces ou composants semi-conducteurs, dispositifs de ventilation, ou l'absorption de chaleur, la dissipation de chaleur ou le transfert d'énergie thermique des dispositifs informations, audio ou d'image, ou la dissipation de chaleur de divers dispositifs d'éclairage ou LED, ou l'absorption de chaleur de l'évaporateur ou la dissipation de chaleur ou le transfert d'énergie thermique des condenseurs de dispositifs de climatisation, ou le transfert d'énergie thermique des dispositifs mécaniques, ou la dissipation de chaleur des pertes de chaleur par friction, ou la dissipation de chaleur ou le transfert d'énergie thermique des dispositifs de chauffage électriques ou d'autres appareils électroménagers de chauffage ou appareils de cuisson, ou l'absorption de chaleur ou le transfert d'énergie thermique des poêles à flamme ou des appareils de cuisson, ou l'absorption, la dissipation de chaleur ou le transfert d'énergie thermique de la couche de terre ou de l'énergie thermique de l'eau, des bâtiments ou des matériaux de construction ou des dispositifs de structure de bâtiment, l'absorption ou la dissipation de chaleur du château d'eau, ou l'absorption, la dissipation de chaleur ou le transfert d'énergie thermique des batteries des piles à combustible ; et
pour le transfert de l'énergie thermique dans les appareils électroménagers, les produits industriels, les produits électroniques, les machines électriques ou les appareils mécaniques, les équipements de production d'énergie, les bâtiments, les appareils de climatisation, les équipements industriels ou les processus de fabrication industrielle.
